(19) Europäisches Patentamt / European Patent Office / Office européen des brevets

(11) **EP 4 239 904 B1**

(12) **FASCICULE DE BREVET EUROPEEN**

(45) Date de publication et mention de la délivrance du brevet:
**20.05.2026 Bulletin 2026/21**

(21) Numéro de dépôt: **23159161.1**

(22) Date de dépôt: **28.02.2023**

(51) Classification Internationale des Brevets (IPC):
**H04B 7/06** (2006.01)

(52) Classification Coopérative des Brevets (CPC):
**H04B 7/0617**

(54) **PROCÉDÉ DE FORMATION DE FAISCEAUX PARAMÉTRABLES ET DISPOSITIFS ASSOCIÉS**

VERFAHREN ZUR ERZEUGUNG VON PARAMETRIERBAREN STRAHLEN UND VORRICHTUNGEN DAFÜR

METHOD FOR FORMING PARAMETERIZABLE BEAMS AND ASSOCIATED DEVICES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **01.03.2022 FR 2201784**

(43) Date de publication de la demande:
**06.09.2023 Bulletin 2023/36**

(73) Titulaire: **THALES**
**92400 Courbevoie (FR)**

(72) Inventeurs:
• **HODE, Jean-Michel**
**33700 MERIGNAC (FR)**
• **SADDI, Jean-Pierre**
**33700 MERIGNAC (FR)**

(74) Mandataire: **Lavoix**
**2, place d'Estienne d'Orves**
**75441 Paris Cedex 09 (FR)**

(56) Documents cités:
**US-A- 5 671 168      US-A1- 2007 217 526**

**Description**

La présente invention concerne un procédé de formation de Q faisceaux par un système de formation de faisceaux comprenant P voies de réception. Elle se rapporte également à un calculateur et un système de formation de Q faisceaux, un produit programme d'ordinateur et un support lisible par ordinateur impliqués dans la mise en œuvre du procédé de formation.

Dans un système multi-antennaire, chaque antenne reçoit un ensemble de signaux en provenance de multiples directions d'écoute avec des retards qui dépendent à la fois de l'angle $\theta$ de la direction d'écoute et de la position de l'antenne au sein du système antennaire.

Idéalement, la formation du faisceau dans la direction $\theta$ consiste à compenser les différences de retard entre antennes pour permettre une sommation cohérente d'un même signal entre les différentes voies de réception dans le double but de gagner en sélectivité spatiale et en rapport signal sur bruit.

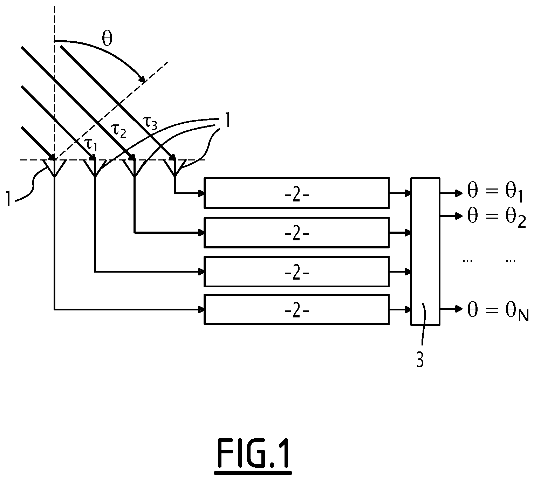

Un exemple de tel système de formation de faisceaux ou de formateur de faisceaux est visible sur la figure 1. Le système comporte un ensemble d'antennes 1, chacune reliée à une chaîne de réception numérique 2 et une unité de formation de faisceaux 3 permettant de générer ici N faisceaux.

Que celui-ci soit analogique ou numérique, la réalisation d'un formateur de faisceaux capable d'écouter dans différentes directions implique la réalisation de retards programmables, ce qui, dans la pratique, est très difficile à réaliser.

Habituellement, on considère que les signaux à écouter sont à bande étroite autour d'une porteuse $f_0$ supposée connue. Dans ce cas, de « simples » déphasages permettent d'assurer la formation du faisceau d'écoute ; si $\tau_k$ est le retard à compenser sur la chaîne d'indice k, ces déphasages valent $\phi_k = 2\pi f_0 \tau_k$.

Cependant, dès lors que la bande du signal d'écoute augmente, cette façon de faire n'est plus possible et une formation de faisceaux impliquant la réalisation de « vrais » retards (par opposition au déphase, plus souvent désigné par la dénomination anglaise correspondante de « true time delay ») est alors indiquée.

Ainsi, le contexte de la présente invention est celui des chaînes de réception dites numériques dont les données de sortie sont les valeurs numérisées d'échantillons temporels périodiques du signal à une cadence notée $f_{ECH}$.

Si le retard à appliquer sur le signal est un multiple de la période d'échantillonnage $T_{ECH} = 1/f_{ECH}$, le problème est simple puisqu'il suffit de retarder numériquement d'un nombre entier d'échantillons. Par contre, si le retard à réaliser, compté en nombre de périodes d'échantillonnage, comporte une partie décimale, voire même simplement fractionnaire, le problème est plus compliqué puisqu'il correspond implicitement à une interpolation du signal. En effet, d'une part, le filtre d'interpolation dépend du retard à assurer (un filtre différent par retard) et, d'autre part, pour une précision donnée, la durée de la réponse temporelle de ce filtre est d'autant plus grande que la bande dans laquelle on veut assurer ce retard avec précision est plus proche de la bande de Nyquist associée à l'échantillonnage (typiquement inversement proportionnelle à la différence de la bande de Nyquist et de la bande utile) ; il est connu que cela est lié à la discontinuité aux bornes de la bande d'échantillonnage de la réponse $e^{-j2\pi f\tau}$ associée à un retard $\tau$ dès lors que $\tau$ n'est pas un multiple de la période d'échantillonnage $1/f_{ECH}$.

Par ailleurs, dans toute formation de faisceaux, la qualité de la réalisation se dégrade dès lors que les voies de réception ne présentent pas exactement la même réponse. Il est connu que les différences de réponse, tant en amplitude spectrale qu'en phase spectrale, sont à corriger préalablement à une bonne formation de faisceau ; les données de correction à apporter sur l'amplitude et la phase spectrale de chacune des voies sont acquises par calibrage et sont de façon courante disponibles dans le domaine spectral. Cette correction constitue donc un filtrage spécifique à chaque voie.

Cependant, comme pour le retard, le gain complexe auquel correspond cette correction n'est en général ni continu, ni continûment dérivable aux bornes de la bande d'échantillonnage si bien que, là encore, la durée de la réponse temporelle de ce filtre de correction est d'autant plus grande que la bande dans laquelle on veut assurer cette correction avec précision est plus proche de la bande de Nyquist associée à l'échantillonnage.

Par ailleurs, la bande dans laquelle on souhaite réaliser la formation de voies dépend souvent du mode de l'application visée. Ainsi, dans un système multimode, la fréquence d'échantillonnage des signaux traités doit être, au sens du critère de Shannon, compatible avec la plus grande des bandes couvertes. Dans ce cas, il n'est pas souhaitable, pour les modes à bande étroite, de conserver le plein débit d'entrée ; une décimation doit alors être opérée et implique pour cela de filtrer la bande utile, cette bande utile pouvant être centrée à différents endroits de la bande d'échantillonnage. Toujours dans ce cas, il peut être souhaitable de former simultanément plusieurs faisceaux couvrant la même bande utile.

Il peut également être souhaitable, dans d'autres configurations, de former simultanément des faisceaux étroits en nombre important et des faisceaux plus larges en nombre plus réduit. L'idéal est alors de pouvoir porter, par multiplexage, indifféremment et simultanément sur un ensemble de canaux de sortie cadencés à $f_{ECH}$, des ensembles de faisceaux de même bande, le $n^{ième}$ canal véhiculant $K_n$ faisceaux multiplexés de bande $f_{ECH}/K_n$ (K pouvant varier d'un canal à l'autre).

Il est donc souhaitable pour un formateur de faisceaux large bande et multimode de respecter plusieurs objectifs distincts.

Il convient de former un ensemble de faisceaux de bandes utiles données et potentiellement différentes ; cela implique de procéder à 3 filtrages différents, l'égalisation des voies de réception spécifique par essence à chaque voie de réception, le retard spécifique à chaque couple faisceau/voie de réception et la sélection de la bande utile, spécifique à chaque faisceau formé. Comme expliqué plus haut, ces filtrages peuvent correspondre à des réponses temporelles très longues qui sont réalisées, de façon approchée dans la pratique, par des filtres de type transversal à réponse impulsionnelle finie a priori tous distincts. De tels filtres sont souvent désignés par l'acronyme FIR renvoyant à la terminologie anglo-saxonne « *Finite Impulse Response* » qui signifie « réponse impulsionnelle finie ». Les filtres FIR selon l'état de technique mettent en œuvre des opérations comprenant l'utilisation de décalages temporels du signal, de gains et de sommations. Le nombre d'opérations est égal à la longueur de la réponse impulsionnelle du filtre FIR considérée (la longueur étant exprimée en nombre d'échantillons). Ainsi, des ressources de calcul en nombre tellement important sont impliquées qu'elles peuvent en être très rapidement rédhibitoire.

Le document US 5 671 168 A décrit aussi un tel type de procédé.

Un objectif est donc de former des groupes de faisceaux paramétrables individuellement avec des ressources impliquées diminuées.

A cet effet, la description décrit un procédé de formation de Q faisceaux multiplexés sur Q' groupes de faisceaux indexés par q', q' étant un entier variant entre 1 et Q', Q' étant un entier supérieur à 1, et le taux de multiplexage valant $2^{K_{q'}}$, $K_{q'}$ valant un entier respectif pour chaque valeur de q', le procédé étant mis en œuvre par un calculateur d'un système de formation de faisceaux comprenant P voies de réception propres chacune à recevoir des signaux provenant d'une antenne respective, chaque antenne présentant une ouverture respective, Q et P étant deux entiers supérieurs ou égaux à 2, le procédé comprenant :

- le passage dans le domaine spectral de signaux issus de signaux provenant de chaque antenne,
- la mise en œuvre d'un ensemble d'opérations dans le domaine spectral, dites opérations de dépointage, l'ensemble d'opérations de dépointage comprenant :

    - pour chaque voie de réception, une opération de génération par duplication d'une contribution à chacun des Q' groupes de faisceaux à générer,
    - pour chaque contribution, une opération de décimation par $2^{K_{q'}}$, et un maintien sur $2^{K_{q'}}$ périodes pour constituer un groupe de $2^{K_{q'}}$ contributions multiplexées par $2^{K_{q'}}$,
    - la mise en œuvre pour chaque groupe de contributions d'une opération d'introduction multiplexée par $2^{K_{q'}}$ d'un ensemble de $2^{K_{q'}}$ retards, et d'un éventuel ensemble de $2^{K_{q'}}$ opérations de pondération de l'ouverture de l'antenne, et

- une opération de sommation des contributions à un faisceau à générer, issues de toutes les voies de réception, multiplexées pour chaque voie sur Q' groupes de contributions, l'opération de sommation étant réalisée pour chaque faisceau à générer.

le procédé comportant, pour chaque voie de réception, la formation de deux voies de calcul, le signal d'entrée de la première voie de calcul étant obtenu par la mise en œuvre du décalage du signal reçu par l'antenne de M points, M étant un entier supérieur ou égal à 2 pour obtenir un signal décalé et le calcul de la somme du signal reçu et du signal décalé, et le signal d'entrée de la deuxième voie de calcul étant obtenu par la mise en œuvre du décalage du signal reçu de M points pour obtenir un signal décalé et le calcul de la différence entre le signal reçu et le signal décalé.

Aujourd'hui la formation de faisceaux se fait avec des architectures FIR classiques fonctionnant dans le domaine temporel alors qu'ici on utilise une architecture FIR travaillant dans le domaine fréquentiel ayant fait l'objet des demandes FR 3049131, FR 3102264, FR 3102262 et FR 3102265 en l'adaptant de manière astucieuse pour obtenir un gain substantiel en ressources et groupes de faisceaux paramétrables individuellement.

A la lecture de ce qui va suivre, le lecteur comprendra que, dans le cas de formation de faisceaux avec des FIR travaillant dans le domaine fréquentiel, deux gains distincts sont obtenus : un gain sur les opérateurs de calcul (multiplieur en particulier) et un gain sur les ressources de mémoire par la mutualisation.

Selon des modes de réalisation particuliers, le procédé de formation de Q faisceaux multiplexés comprend une ou plusieurs des caractéristiques suivantes, prises isolément ou suivant toutes les combinaisons techniquement possibles :

- les opérations mises en œuvre dans le domaine spectral comportent, en outre, une opération d'égalisation des voies, l'opération d'égalisation étant mise en œuvre avant les opérations de dépointage, ces opérations étant de préférence réalisées de manière multiplicative.
- les opérations mises en œuvre dans le domaine spectral comportent, en outre, une opération de limitation de bande, l'opération de limitation de bande étant mise en œuvre après les opérations de dépointage, ces opérations étant de préférence réalisées de manière multiplicative.

- le passage dans le domaine spectral est réalisé par application d'une transformée de Fourier discrète à M points sur chacune des voies de calcul.
- le procédé comporte une étape de retour dans le domaine temporel, l'étape de retour dans le domaine temporel comportant l'application de $2^{K_{q'}}$ transformées de Fourier discrètes inverses à $M/2^{K_{q'}}$ points multiplexées par $2^{K_{q'}}$ sur chacune des voies de calcul, le procédé comportant une opération de décalage spectral de la deuxième voie de calcul par application multiplicative d'un signal $e[+j\ floor(n/2^{K_{q'}})\pi/(M/2^{K_{q'}})]$, n étant un entier allant de 0 à M-1 et la fonction floor désignant la fonction partie entière, et une opération de sommation des deux sorties des deux voies de calcul.

La description décrit aussi un calculateur, notamment circuit logique programmable, adapté pour mettre en œuvre les opérations d'un procédé de formation tel que précédemment décrit.

La description propose également un système de formation de Q faisceaux multiplexés sur Q' groupes de faisceaux indexés par q', q' étant un entier variant entre 1 et Q', Q' étant un entier supérieur à 2, Q' étant un entier supérieur à 1, et le taux de multiplexage valant $2^{K_{q'}}$, $K_{q'}$ valant un entier respectif pour chaque valeur de q', le système de formation comprenant P voies de réception propres chacune à recevoir des signaux provenant d'une antenne respective, Q et P étant deux entiers supérieurs ou égaux à 2, et le système de formation comprenant un calculateur tel que précédemment décrit.

La description décrit aussi un produit programme d'ordinateur comprenant des instructions qui, lorsque le programme est exécuté par un ordinateur, conduisent celui-ci à mettre en œuvre les opérations d'un procédé ou un procédé tel que précédemment décrit.

La description propose également un support lisible par ordinateur comprenant des instructions qui, lorsqu'elles sont exécutées par un ordinateur, conduisent celui-ci à mettre en œuvre les opérations d'un procédé ou un procédé tel que précédemment décrit.

Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un système de formation de faisceaux,
- la figure 2 est une représentation schématique des ressources d'une architecture de filtre à réponse temporelle longue contrôlée dans le spectre,
- la figure 3 est une représentation schématique d'un exemple d'architecture modifiée par rapport à l'architecture représentée à la figure 2 dans laquelle certaines ressources sont communalisées,
- la figure 4 est une représentation schématique d'un autre exemple d'architecture modifiée par rapport à l'architecture représentée à la figure 2 dans laquelle certaines ressources sont communalisées,
- la figure 5 est un ensemble de deux graphes montrant la réponse temporelle d'un filtre de Hilbert (partie réelle en haut et partie imaginaire en bas),
- la figure 6 est un graphe montrant la réponse fréquentielle d'un filtre de Hilbert (partie réelle en haut et partie imaginaire en bas),
- [la figure 7 est un ensemble de deux graphes montrant l'effet d'élimination totale de la deuxième bande de Nyquist dans le spectre d'un filtre de Hilbert,
- la figure 8 est ensemble de deux graphes permettant de comparer le filtre de Hilbert de la figure 6 (graphe de gauche) avec le filtre requis lorsque le signal d'entrée est complexe pour éviter les problèmes liés à la discontinuité de la réponse fréquentielle du retard aux bornes de la bande d'échantillonnage (graphe de droite),
- les figures 9 et 10 sont des représentations schématiques d'un exemple de système de formation de faisceaux comportant des parties A à H, (la figure 9 correspondant à la partie gauche et la figure 10 à la partie droite),
- la figure 11 est une représentation schématique des parties A à D du système de formation de faisceaux des figures 9 et 10,
- la figure 12 est une représentation schématique des parties E à H du système de formation de faisceaux des figures 9 et 10,
- la figure 13 est une représentation schématique de la décomposition d'une IFFT à M points en une DFT à 2 points et une IFFT à M/2 points,
- la figure 14 est une représentation schématique d'un exemple de système de formation de faisceaux avec multiplexage de 2 faisceaux décimés par 2,
- la figure 15 montre la modification de l'IFFT à $2^N$ points en vue du multiplexage de $2^K$ faisceaux décimés par $2^K$,
- la figure 16 est une représentation schématique d'un exemple de système de formation de faisceaux avec multiplexage de $2^K$ faisceaux décimés par $2^K$,
- la figure 17 est une représentation schématique d'un dispositif de recalage fréquentiel de la bande décimée,
- la figure 18 est une représentation schématique d'un autre exemple de système de formation de faisceaux avec multiplexage de $2^K$ faisceaux décimés par $2^K$,
- la figure 19 est une représentation synoptique de la formation de faisceaux,

- les figures 20 et 21 sont une représentation schématique d'un autre exemple de système de formation de faisceaux avec multiplexage de $2^K$ faisceaux décimés par $2^K$ (la figure 20 correspondant à la partie gauche et la figure 21 à la partie droite),
- la figure 22 est une représentation schématique d'un exemple de dispositif de calibrage,

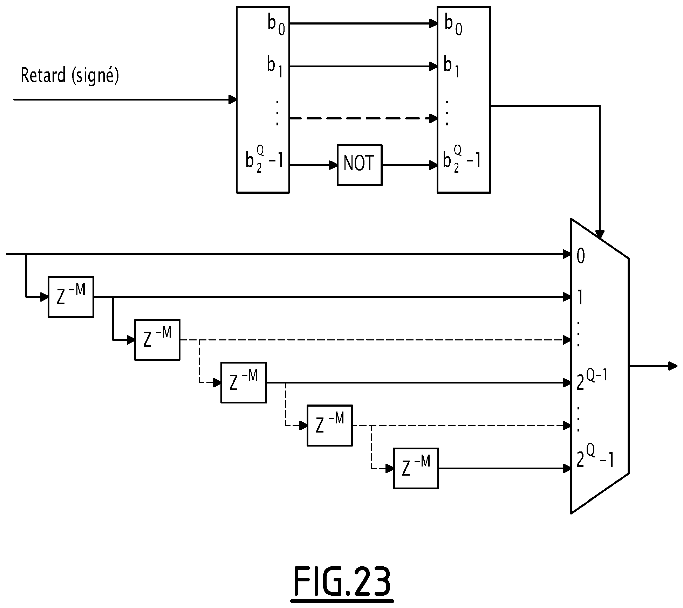

- la figure 23 est une représentation schématique d'un exemple de dispositif de recalage temporel,
- la figure 24 montre la modification de la FFT à $2^N$ points en vue du traitement multiplexé de $2^K$ faisceaux décimés par $2^K$,
- la figure 25 représente schématiquement un système de formation de faisceaux en émission avec multiplexage de $2^K$ faisceaux décimés par $2^K$, et
- la figure 26 représente un détail d'une partie du système de la figure 24, et
- la figure 27 représente un détail d'une autre partie du système de la figure 24.

Pour faciliter la suite de la lecture de la description, celle-ci est séparée en chapitres et sections. Néanmoins, les chapitres et sections ne sont pas indépendantes et les notions utilisées dans un chapitre sont également valables pour les autres.

Dans l'ordre, seront ainsi évoqués :

1 - QUELQUES NOTIONS PRELIMINAIRE

    1.1 - REALISATION DE FILTRES A REPONSES TEMPORELLES LONGUES
    1.2 - REALISATION D'UN RETARD
    1.3 - DEMODULATION IQ - FILTRAGE DE HILBERT

2 - DESCRIPTION D'EXEMPLES DE PROCEDES DE FORMATION

    2.1 - PRINCIPE GENERAL DU PROCEDE DE FORMATION
    2.2 - DESCRIPTION D'UN EXEMPLE DE PROCEDE DE FORMATION DE FAISCEAUX

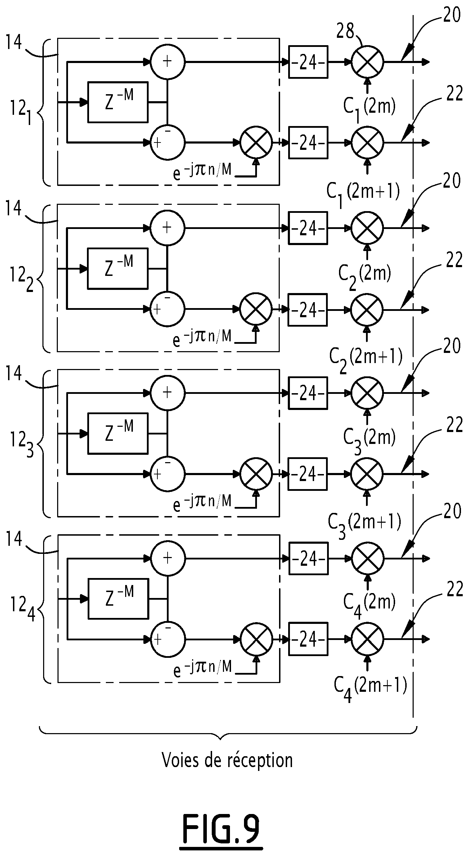

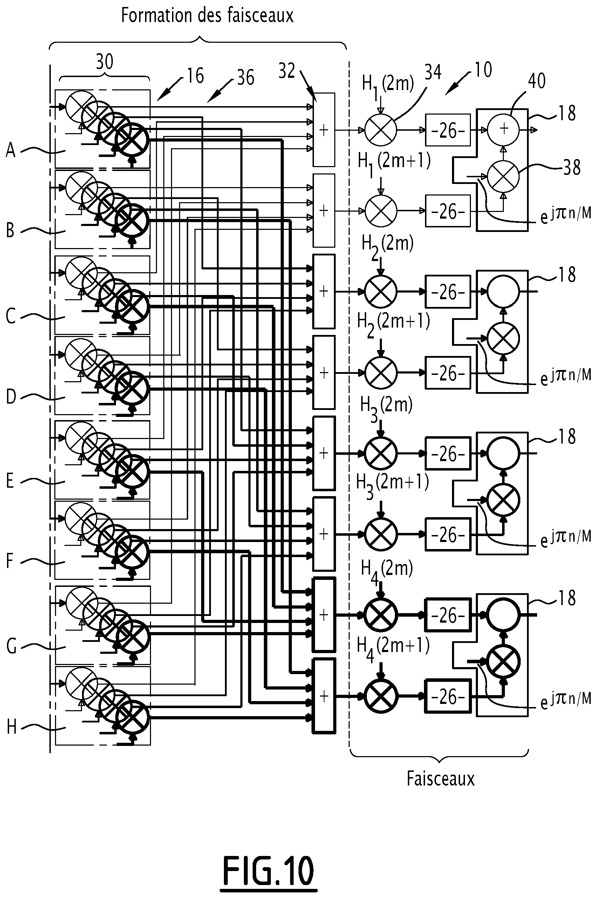

        2.2.1 - Cas des figures 9 et 10
        2.2.2 - Généralisation

    2.3 - DESCRIPTION D'UN EXEMPLE DE PROCEDE DE FORMATION DE FAISCEAUX

        2.3.1 - Décimation par 2 (par exemple, passage de réel en I/Q)
        2.3.2 - Cas de bandes non comprises entre 0 et -1 + $2^{N-K}$
        2.3.3 - Décomposition en formations de faisceaux partielles successives
        2.3.4 - Cas général

3 - DESCRIPTION D'UN PROCEDE DE CALIBRAGE

4 - TRANSPOSITION DES PROCEDES DE FORMATION A L'EMISSION

En particulier, il sera évoqué, en référence notamment au paragraphe 2.2, un procédé de formation de Q faisceaux par un calculateur d'un système de formation de faisceaux comprenant P voies de réception propres chacune à recevoir des signaux provenant d'une antenne respective, chaque antenne présentant une ouverture respective, Q étant un entier supérieur ou égal à 1 et P étant un entier supérieur ou égal à 2, le procédé comprenant :

- le passage dans le domaine spectral de signaux issus de signaux provenant de chaque antenne,
- la mise en œuvre d'opérations dans le domaine spectral, les opérations comprenant des opérations de dépointage, les opérations de dépointage comprenant :
- pour chaque voie de réception, une opération de génération par duplication d'une contribution à chacun des Q faisceaux à générer,
- la mise en œuvre pour chaque contribution d'une opération d'introduction d'un retard et d'une éventuelle opération de pondération de l'ouverture de l'antenne, et
- une opération de sommation des contributions à un faisceau à générer issues de toutes les voies de réception, l'opération de sommation étant réalisée pour chaque faisceau à générer.

Selon des aspects particuliers, le procédé de formation de Q faisceaux comprend une ou plusieurs des caractéristiques suivantes, prises isolément ou suivant toutes les combinaisons techniquement possibles :

- les opérations mises en œuvre dans le domaine spectral comportent, en outre, une opération d'égalisation des voies, l'opération d'égalisation étant mise en œuvre avant les opérations de dépointage, ces opérations étant de préférence réalisées de manière multiplicative.
- les opérations mises en œuvre dans le domaine spectral comportent, en outre, une opération de limitation de bande, l'opération de limitation de bande étant mise en œuvre après les opérations de dépointage, ces opérations étant de préférence réalisées de manière multiplicative.
- le procédé comporte, pour chaque voie de réception la formation de deux voies de calcul, le signal d'entrée de la première voie de calcul étant obtenu par la mise en œuvre du décalage du signal reçu par l'antenne de M points, M étant un entier supérieur ou égal à 2 pour obtenir un signal décalé et le calcul de la somme du signal reçu et du signal décalé, et le signal d'entrée de la deuxième voie de calcul étant obtenu par la mise en œuvre du décalage du signal reçu de M points pour obtenir un signal décalé et le calcul de la différence entre le signal reçu et le signal décalé, cette différence étant translatée en fréquence par application multiplicative d'un signal $e^{-jnPi/M}$, n étant un entier allant de 0 à M-1.

- le passage dans le domaine spectral est réalisé par application d'une transformée de Fourier discrète à M points sur chacune des voies de calcul.
- le procédé comporte une étape de retour dans le domaine temporel, l'étape de retour dans le domaine temporel comportant l'application d'une transformée de Fourier discrète inverse à M points sur chacune des voies de calcul, le procédé comportant une opération de décalage spectral de la deuxième voie de calcul par application multiplicative d'un signal $e^{+jnPi/M}$ et une opération de sommation des deux sorties des deux voies de calcul.

La description décrit également :

- un calculateur, notamment circuit logique programmable, adapté pour mettre en œuvre les opérations d'un procédé de formation tel que précédemment décrit.
- un système de formation de Q faisceaux comportant P voies de réception propres chacune à recevoir des signaux provenant d'une antenne respective, Q étant un entier supérieur ou égal à 1 et P étant un entier supérieur ou égal à 2, le système de formation comportant un calculateur tel que précédemment décrit.
- un produit programme d'ordinateur comprenant des instructions qui, lorsque le programme est exécuté par un ordinateur, conduisent celui-ci à mettre en œuvre les opérations d'un procédé ou un procédé tel que précédemment décrit.
- un support lisible par ordinateur comprenant des instructions qui, lorsqu'elles sont exécutées par un ordinateur, conduisent celui-ci à mettre en œuvre les opérations d'un procédé ou un procédé tel que précédemment décrit.

Il sera aussi évoqué, en référence notamment au paragraphe 2.3, un procédé de formation de Q faisceaux multiplexés sur Q' groupes de faisceaux indexés par q', q' étant un entier variant entre 1 et Q', Q' étant un entier supérieur à 1, et le taux de multiplexage valant $2^{K_{q'}}$, $K_{q'}$ valant un entier respectif pour chaque valeur de q', le procédé étant mis en œuvre par un calculateur d'un système de formation de faisceaux comprenant P voies de réception propres chacune à recevoir des signaux provenant d'une antenne respective, chaque antenne présentant une ouverture respective, Q et P étant deux entiers supérieurs ou égaux à 2, le procédé comprenant :

- le passage dans le domaine spectral de signaux issus de signaux provenant de chaque antenne,
- la mise en œuvre d'un ensemble d'opérations dans le domaine spectral, dites opérations de dépointage, l'ensemble d'opérations de dépointage comprenant :

  - pour chaque voie de réception, une opération de génération par duplication d'une contribution à chacun des Q' groupes de faisceaux à générer,
  - pour chaque contribution, une opération de décimation par $2^{K_{q'}}$, et un maintien sur $2^{K_{q'}}$ périodes pour constituer un groupe de $2^{K_{q'}}$ contributions multiplexées par $2^{K_{q'}}$,
  - la mise en œuvre pour chaque groupe de contributions d'une opération d'introduction multiplexée par $2^{K_{q'}}$ d'un ensemble de $2^{K_{q'}}$ retards, et d'un éventuel ensemble de $2^{K_{q'}}$ opérations de pondération de l'ouverture de l'antenne, et

- une opération de sommation des contributions à un faisceau à générer, issues de toutes les voies de réception, multiplexées pour chaque voie sur Q' groupes de contributions, l'opération de sommation étant réalisée pour chaque faisceau à générer.

Selon des aspects particuliers, le procédé de formation de Q faisceaux multiplexés comprend une ou plusieurs des caractéristiques suivantes, prises isolément ou suivant toutes les combinaisons techniquement possibles :

- les opérations mises en œuvre dans le domaine spectral comportent, en outre, une opération d'égalisation des voies, l'opération d'égalisation étant mise en œuvre avant les opérations de dépointage, ces opérations étant de préférence réalisées de manière multiplicative.
- les opérations mises en œuvre dans le domaine spectral comportent, en outre, une opération de limitation de bande, l'opération de limitation de bande étant mise en œuvre après les opérations de dépointage, ces opérations étant de préférence réalisées de manière multiplicative.
- le procédé comporte, pour chaque voie de réception, la formation de deux voies de calcul, le signal d'entrée de la première voie de calcul étant obtenu par la mise en œuvre du décalage du signal reçu par l'antenne de M points, M étant un entier supérieur ou égal à 2 pour obtenir un signal décalé et le calcul de la somme du signal reçu et du signal décalé, et le signal d'entrée de la deuxième voie de calcul étant obtenu par la mise en œuvre du décalage du signal reçu de M points pour obtenir un signal décalé et le calcul de la différence entre le signal reçu et le signal décalé.
- le passage dans le domaine spectral est réalisé par application d'une transformée de Fourier discrète à M points sur chacune des voies de calcul.
- le procédé comporte une étape de retour dans le domaine temporel, l'étape de retour dans le domaine temporel comportant l'application de $2^{K_{q'}}$ transformées de Fourier discrètes inverses à $M/2^{K_{q'}}$ points multiplexées par $2^{K_{q'}}$ sur chacune des voies de calcul, le procédé comportant une opération de décalage spectral de la deuxième voie de calcul par application multiplicative d'un signal $e[+j\ \text{floor}(n/2^{K_{q'}})\pi/(M/2^{K_{q'}})]$, n étant un entier allant de 0 à M-1 et la fonction floor désignant la fonction partie entière, et une opération de sommation des deux sorties des deux voies de calcul.

La description décrit également :

- un calculateur, notamment circuit logique programmable, adapté pour mettre en œuvre les opérations d'un procédé de formation tel que précédemment décrit.
- un système de formation de Q faisceaux multiplexés sur Q' groupes de faisceaux indexés par q', q' étant un entier variant entre 1 et Q', Q' étant un entier supérieur à 2, Q' étant un entier supérieur à 1, et le taux de multiplexage valant $2^{K_{q'}}$, $K_{q'}$ valant un entier respectif pour chaque valeur de q', le système de formation comprenant P voies de réception propres chacune à recevoir des signaux provenant d'une antenne respective, Q et P étant deux entiers supérieurs ou égaux à 2, et le système de formation comprenant un calculateur tel que précédemment décrit.
- un produit programme d'ordinateur comprenant des instructions qui, lorsque le programme est exécuté par un ordinateur, conduisent celui-ci à mettre en œuvre les opérations d'un procédé ou un procédé tel que précédemment décrit.
- un support lisible par ordinateur comprenant des instructions qui, lorsqu'elles sont exécutées par un ordinateur, conduisent celui-ci à mettre en œuvre les opérations d'un procédé ou un procédé tel que précédemment décrit.

Il sera également évoqué, en référence notamment au paragraphe 3, un procédé de calibrage d'un système de formation de faisceaux comprenant P voies de réception propres chacune à recevoir des signaux provenant d'une antenne respective, Q étant un entier supérieur ou égal à 1 et P étant un entier supérieur ou égal à 2, le système de formation comportant un calculateur propre à mettre en œuvre les étapes suivantes :

- le passage à l'aide d'une analyse spectrale dans le domaine spectral de signaux provenant de chaque antenne,
- la mise en œuvre d'opérations dans le domaine spectral,

le procédé de calibrage comportant :

- pour chaque voie de réception, l'injection dans le domaine temporel d'une réplique d'un signal numérique servant à la constitution d'un signal de calibrage, cette réplique étant synchronisée avec les moyens d'analyse spectrale appliqués aux signaux des voies de réception, l'injection étant réalisée de façon identique pour chaque voie de réception,
- pour chaque voie de réception, le passage dans le domaine spectral de ce signal numérique par des moyens identiques à ceux appliqués aux signaux des voies de réception, lesdits moyens identiques étant synchronisés entre eux, pour constituer un signal de référence identique sur chaque voie de réception, le passage étant réalisé de manière identique pour chaque voie de réception,
- la mesure, pour chaque voie de réception, de valeurs du signal de référence et de valeurs du signal propagé sur la voie de réception, et
- la déduction de l'écart entre le signal de référence et le signal propagé sur la voie de réception en fonction des valeurs mesurées.

Selon des aspects particuliers, le procédé de calibrage comprend une ou plusieurs des caractéristiques suivantes, prises isolément ou suivant toutes les combinaisons techniquement possibles :

- le procédé comportant, en outre, les étapes suivantes :

    - la génération d'un signal de calibrage numérique
    - la conversion en analogique du signal de calibrage,
    - la transposition en fréquence du signal de calibrage converti,
    - l'amplification du signal de calibrage transposé, et
    - la distribution équilibrée aux différentes voies de réception.

- lorsque plusieurs voies de réception sont abritées sur une même carte électronique, la constitution du signal de référence est mutualisée en commun à toutes les voies d'une même carte (une seule génération de signal de référence par carte).
- les valeurs mesurées comprennent la corrélation de puissance entre les spectres du signal propagé sur une voie de réception et le signal de référence.
- les valeurs mesurées comprennent la densité spectrale de puissance du signal de référence et/ou la densité de puissance du signal propagé sur la voie de réception.
- les valeurs mesurées sont obtenues par intégration sur plusieurs trames successives.
- l'étape de déduction comporte l'estimation de la phase de la corrélation de puissance entre le spectre du signal sur une voie de réception et le signal de référence, pour obtenir une phase estimée, la phase de l'écart entre une voie de réception et le signal de référence étant la phase estimée.
- l'étape de déduction comporte l'estimation de l'écart en amplitude entre une voie de réception et le signal de référence par calcul de la racine carrée du rapport entre les densités spectrales de puissance du signal sur une voie de réception et du signal de référence.
- l'étape de déduction comporte l'estimation de l'écart en amplitude entre une voie de réception et le signal de référence par calcul du rapport entre la densité spectrale de puissance du signal de référence et la corrélation de puissance entre le spectre du signal sur ladite voie de réception et le signal de référence. Cette opération se fait à coût réduit.
- le signal de référence est un bruit.

La description décrit également :

- un dispositif de calibrage d'un système de formation de Q faisceaux comportant P voies de réception propres chacune à recevoir des signaux provenant d'une antenne respective, Q étant un entier supérieur ou égal à 1 et P étant un entier supérieur ou égal à 2, le dispositif de calibrage étant propre à mettre en œuvre un procédé de calibrage tel que précédemment décrit.
- un produit programme d'ordinateur comprenant des instructions qui, lorsque le programme est exécuté par un ordinateur, conduisent celui-ci à mettre en œuvre un procédé de calibrage tel que précédemment décrit.
- un support lisible par ordinateur comprenant des instructions qui, lorsqu'elles sont exécutées par un ordinateur, conduisent celui-ci à mettre en œuvre un procédé de calibrage tel que précédemment décrit.

Il sera aussi évoqué, en référence notamment au paragraphe 4 et de manière transposée au paragraphe 2.2, un procédé de formation de P voies d'émission multifaisceaux à partir de Q faisceaux, le procédé étant mis en œuvre par un calculateur d'un système de formation de faisceaux en émission comprenant P voies d'émissions munies chacune d'une antenne, Q étant un entier supérieur ou égal à 1 et P étant un entier supérieur ou égal à 2, le procédé comprenant :

- le passage dans le domaine spectral de signaux issus des faisceaux,
- la mise en œuvre d'opérations dans le domaine spectral, les opérations comprenant des opérations de pointage, les opérations de pointage comprenant :

    - une opération de génération pour chaque faisceau d'une contribution pour chacune des P voies d'émission par mise en œuvre pour chaque contribution d'une opération d'introduction d'un retard et d'une éventuelle pondération de l'ouverture de l'antenne, et
    - une opération de sommation des contributions d'une voie d'émission correspondant à chaque faisceau, l'opération de sommation étant réalisée pour chaque voie d'émission à générer.

Selon des aspects particuliers, le procédé de formation de P voies d'émission comprend une ou plusieurs des caractéristiques suivantes, prises isolément ou suivant toutes les combinaisons techniquement possibles :

- les opérations mises en œuvre dans le domaine spectral comportent, en outre, une opération d'égalisation des voies, l'opération d'égalisation étant mise en œuvre après les opérations de pointage, ces opérations étant mises en œuvre de manière multiplicative.
- les opérations mises en œuvre dans le domaine spectral comportent, en outre, une opération de limitation de bande, l'opération de limitation de bande étant mise en œuvre avant les opérations de pointage, ces opérations étant mises en œuvre de manière multiplicative.
- le procédé comporte, pour chaque faisceau, la formation de deux voies de calcul, le signal d'entrée de la première voie de calcul étant obtenu par la mise en œuvre du décalage du signal du faisceau de M points, M étant un entier supérieur ou égal à 2 pour obtenir un signal décalé et le calcul de la somme du signal reçu et du signal décalé, et

le signal d'entrée de la deuxième voie de calcul étant obtenu par la mise en œuvre du décalage du signal du faisceau de M points pour obtenir un signal décalé et le calcul de la différence entre le signal reçu et le signal décalé, cette différence étant décalée spectralement par application multiplicative d'un signal $e^{-jnPi/M}$, n étant un entier allant de 0 à M-1.

- le passage dans le domaine spectral est réalisé par application d'une transformée de Fourier discrète à M points sur chacune des voies de calcul.
- le procédé comporte une étape de retour dans le domaine temporel, l'étape de retour dans le domaine temporel comportant l'application d'une transformée de Fourier discrète inverse à M points sur chacune des voies de calcul, le procédé comportant une opération de décalage spectral de la deuxième voie de calcul par application multiplicative d'un signal $e^{+jnPi/M}$ et une opération de sommation des deux sorties des deux voies de calcul.

La description décrit également :

- un calculateur, notamment circuit logique programmable, adapté pour mettre en œuvre les opérations d'un procédé de formation tel que précédemment décrit.
- un système de formation de P voies d'émission multifaisceaux à partir de Q faisceaux, le système de formation comportant P voies d'émission munies chacune d'une antenne, Q étant un entier supérieur ou égal à 1 et P étant un entier supérieur ou égal à 2, le système de formation comportant un calculateur tel que précédemment décrit.
- un produit programme d'ordinateur comprenant des instructions qui, lorsque le programme est exécuté par un ordinateur, conduisent celui-ci à mettre en œuvre les opérations d'un procédé de formation de P voies d'émission multifaisceaux à partir de Q faisceaux ou un procédé de formation de P voies d'émission multifaisceaux à partir de Q faisceaux tel que précédemment décrit.
- un support lisible par ordinateur comprenant des instructions qui, lorsqu'elles sont exécutées par un ordinateur, conduisent celui-ci à mettre en œuvre les opérations d'un procédé de formation de P voies d'émission multifaisceaux à partir de Q faisceaux ou un procédé de formation de P voies d'émission multifaisceaux à partir de Q faisceaux tel que précédemment décrit.

Il sera également évoqué, en référence notamment au paragraphe 4 et de manière transposée au paragraphe 2.3, un procédé de formation de P voies d'émission multifaisceaux à partir de Q faisceaux multiplexés sur Q' groupes de faisceaux indexés par q', q' étant un entier variant entre 1 et Q', Q' étant un entier supérieur à 1, et le taux de multiplexage valant $2^{K_{q'}}$, $K_{q'}$ valant un entier respectif pour chaque valeur de q', le procédé étant mis en œuvre par un calculateur d'un système de formation de faisceaux en émission comprenant P voies d'émissions munies chacune d'une antenne présentant une ouverture respective, Q et P étant deux entiers supérieurs ou égaux à 2, le procédé comprenant :

- pour chaque groupe q' de faisceaux, le passage dans le domaine spectral des signaux composant le groupe de faisceaux multiplexés, pour obtenir des spectres multiplexés,
- la mise en œuvre d'opérations dans le domaine spectral, les opérations comprenant des opérations de pointage et d'interpolation comprenant :

  - une opération de formation d'autant de répliques des spectres que de voies d'émission à former,
  - pour chaque réplique correspondant à chacune des P voies d'émission, une opération de génération d'une contribution à la voie d'émission correspondante par mise en œuvre, pour chaque contribution, d'une opération d'introduction multiplexée par $2^{K_{q'}}$ d'un ensemble de $2^{K_{q'}}$ retards, et d'un éventuel ensemble de $2^{K_{q'}}$ pondérations de l'ouverture de l'antenne,
  - une opération d'intégration sur $2^{K_{q'}}$ points,

- une opération d'interpolation par insertion de $2^{K_{q'}}$ - 1 zéros, et
- une opération de sommation des contributions à une voie d'émission correspondant à chaque groupe de faisceaux, l'opération de sommation étant réalisée pour chaque voie d'émission à générer.

Selon des aspects particuliers, le procédé de formation de P voies d'émission comprend une ou plusieurs des caractéristiques suivantes, prises isolément ou suivant toutes les combinaisons techniquement possibles :

- les opérations mises en œuvre dans le domaine spectral comportent, en outre, une opération d'égalisation des voies, l'opération d'égalisation étant mise en œuvre après les opérations de pointage, ces opérations étant mises en œuvre de manière multiplicative.
- les opérations mises en œuvre dans le domaine spectral comportent, en outre, une opération de limitation de bande, l'opération de limitation de bande étant mise en œuvre avant les opérations de pointage, ces opérations étant mises en œuvre de manière multiplicative.
- le procédé comporte, pour chaque groupe de faisceaux, la formation de deux voies de calcul, le signal d'entrée de la première voie de calcul étant obtenu par la mise en œuvre du décalage du signal du faisceau de M points, M étant un entier supérieur ou égal à $2 \times 2^{K_{q'}}$ pour obtenir un signal décalé et le calcul de la somme du signal du groupe de faisceaux et du signal décalé, et le signal d'entrée de la deuxième voie de calcul étant obtenu par la mise en œuvre du décalage du signal du groupe de faisceaux de M points pour obtenir un signal décalé et le calcul de la différence entre le signal du groupe de faisceaux et le signal décalé, cette différence étant translatée en fréquence par application multiplicative d'un signal $e[+j \, \text{floor}(n/2^{K_{q'}})\pi/(M/2^{K_{q'}})]$, n étant un entier allant de 0 à M-1 et la fonction floor désignant la fonction partie entière, M étant un entier supérieur ou égal à $2 \times 2^{K_{q'}}$.
- le passage dans le domaine spectral est réalisé sur chacune des voies de calcul par application d'une transformée de Fourier discrète à $M/2^{K_{q'}}$ points multiplexée par $2^{K_{q'}}$.
- le procédé comporte une étape de retour dans le domaine temporel, l'étape de retour dans le domaine temporel comportant l'application d'une transformée de Fourier discrète inverse à M points sur chacune des voies de calcul, le procédé comportant une opération de décalage spectral de la deuxième voie de calcul par application multiplicative d'un signal $e^{+jn\text{Pi}/M}$ et une opération de sommation des deux sorties des deux voies de calcul.

La description décrit également :

- un calculateur, notamment circuit logique programmable, adapté pour mettre en œuvre les opérations d'un procédé de formation tel que précédemment décrit.
- un système de formation de P voies d'émission multifaisceaux à partir de Q faisceaux multiplexés sur Q' groupes de sous-faisceaux indexés par q', q' étant un entier variant entre 1 et Q', Q' étant un entier supérieur à 2, système de formation de faisceaux en émission comprenant P voies d'émissions munies chacune d'une antenne présentant une ouverture respective, Q et P étant deux entiers supérieurs ou égaux à 2, le système de formation comportant également un calculateur tel que précédemment décrit.
- un produit programme d'ordinateur comprenant des instructions qui, lorsque le programme est exécuté par un ordinateur, conduisent celui-ci à mettre en œuvre les opérations d'un procédé de formation de P voies d'émission multifaisceaux à partir de Q faisceaux multiplexés ou un procédé de formation de P voies d'émission multifaisceaux à partir de Q faisceaux multiplexés, le procédé étant tel que précédemment décrit.
- un support lisible par ordinateur comprenant des instructions qui, lorsqu'elles sont exécutées par un ordinateur, conduisent celui-ci à mettre en œuvre les opérations d'un procédé de formation de P voies d'émission multifaisceaux à partir de Q faisceaux multiplexés ou un procédé de formation de P voies d'émission multifaisceaux à partir de Q faisceaux multiplexés, le procédé étant tel que précédemment décrit.

## 1 - QUELQUES NOTIONS PRELIMINAIRES

Ces notions préliminaires font partie de l'arrière-plan technologique.

### 1.1 - REALISATION DE FILTRES A REPONSES TEMPORELLES LONGUES

Lorsque les longueurs des réponses temporelles d'un filtre de type FIR sont très grandes, la réalisation du filtrage devient problématique voire impossible compte tenu du très grand nombre de ressources que cela implique, surtout si le FIR doit être programmable. Pour contourner ce problème, une solution consiste à effectuer cette opération dans le spectre. Pour cela on passe du domaine des temps à celui des fréquences par transformation de Fourier, l'opération de filtrage devenant alors multiplicative, puis on revient dans le domaine des temps par transformation de Fourier inverse.

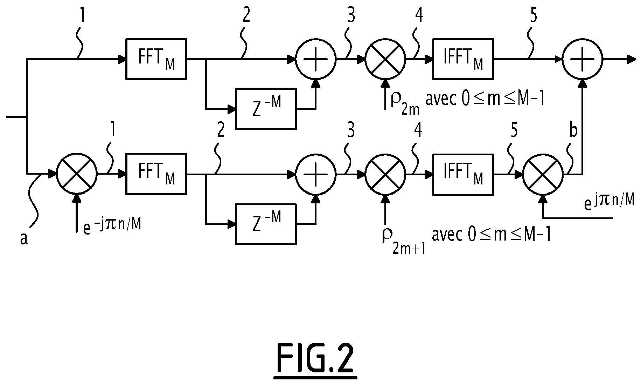

Cela permet de définir une architecture générique de filtre ayant fait l'objet d'une demande de brevet publié sous le numéro FR 3 049 131 A1 dont le contenu est brièvement résumé dans ce qui suit, de plus amples informations étant contenus dans la description de cette demande. Conformément à la figure 2 qui fait référence une architecture de filtre à réponse temporelle longue contrôlée dans le spectre, cette architecture permet de réaliser à l'aide de FFT de durées N un FIR de réponse impulsionnelle de durée N entièrement contenue dans le domaine des temps positifs.

Pour rappel, une transformation de Fourier est mise en œuvre par une transformée de Fourier rapide souvent désignée par l'acronyme FFT pour « *Fast Fourier Transform* » (transformée de Fourier rapide en français). Plus précisément, le passage du domaine de l'espace des temps à l'espace des fréquences est obtenu par emploi d'une FFT alors que le passage du domaine de l'espace des fréquences à l'espace des temps est obtenu par l'emploi d'une IFFT. L'acronyme IFFT renvoie à « *Inverse Fast Fourier Transform* » (transformée de Fourier rapide inverse en français).

Dans le FIR de la figure 2, les coefficients $\rho_k$ représentent la densité spectrale obtenue par une FFT à 2N points de la réponse du FIR, les temps négatifs représentant N zéros sur les 2N valeurs de la trame temporelle :

$$\rho_k = \sum_{n=0}^{2N-1} a_n e^{\frac{-j2\pi nk}{2N}} = \sum_{n=0}^{N-1} a_n e^{\frac{-j2\pi nk}{2N}}$$

Signalons que, si la réponse temporelle associée au filtrage est entièrement contenue dans les temps négatifs (tel que cela arrive lorsqu'on opère le filtrage adapté à un signal par le spectre conjugué), alors la recombinaison de sortie entre les deux voies (fréquences paires et impaires) s'opère par une soustraction en lieu et place de l'addition indiquée dans la figure 2.

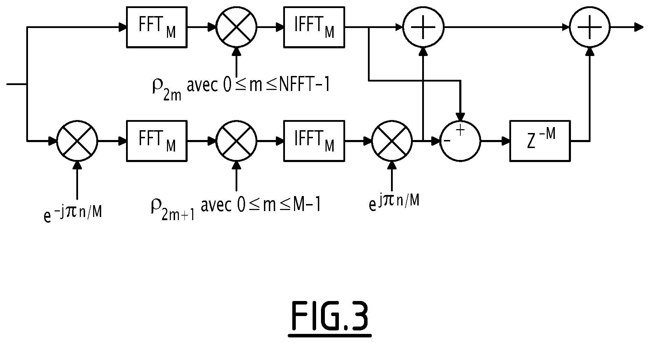

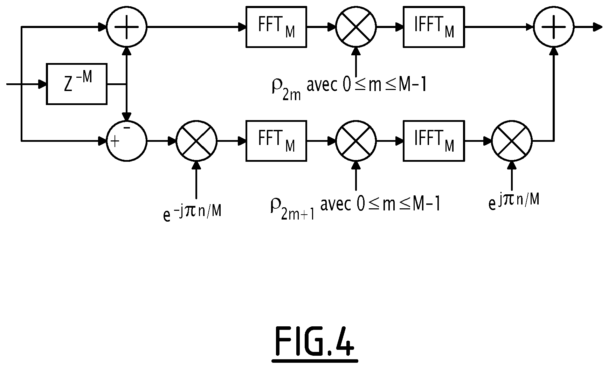

On peut constater que, dans cette architecture, le bloc $1 + z^{-N}$ (passant de la position indiqué 2 à la position indiquée 3 sur la figure 2) peut être translaté à volonté sur n'importe laquelle des positions 1 à 5. Il peut également être translaté sur l'une ou l'autre des positions a ou b mais à condition d'être remplacé par un bloc $1 - z^{-N}$. Cela permet de définir plusieurs architectures équivalentes dont, en particulier, les deux qui sont proposées respectivement sur figure 3 et sur la figure 4 et qui permettent de communaliser les ressources de mémorisation $z^{-N}$.

Ces architectures de FIR sont particulièrement intéressantes car elles permettent de réduire considérablement les ressources de calcul requises par rapport à un FIR classique dès lors que le nombre de coefficients augmente, typiquement dans un rapport M à log(M) ; cela se paye cependant par une augmentation certaine des ressources en mémoire (facteur 4 pour les architectures des deux figures 3 et 4 et 5 pour l'architecture de la figure 2).

Les ressources de calcul requises pour une réponse de durée max égale à N = 2M sont :

- additions :

$$3 + 4 \times 2 \times M = 8M + 3$$

- multiplications :

$$4 + 4 \times M / 2 = 2M + 4$$

*Eléments sur la décomposition en Radix*

Pour comprendre la suite de la description, il convient d'expliciter des généralités sur la décomposition d'une transformée de Fourier discrète (TFD) en Radix (x étant le nombre de points factorisables).

La transformée de Fourier discrète à N points d'une séquence de N points $x_n$ (N étant un nombre entier) vaut :

$$X_m = \sum_{n=0}^{N-1} x_n e^{-j2\pi \frac{n \times m}{N}}$$ Dans le cas où N est le produit $N = N_1 \times N_2$ de deux nombres entiers $N_1$ et $N_2$, il peut être écrit :

$$X_{m_1 N_2 + m_2} = \sum_{n_1=0}^{N_1-1} \sum_{n_2=0}^{N_2-1} x_{n_2 N_1 + n_1} e^{-j2\pi \frac{(n_2 N_1 + n_1) \times (m_1 N_2 + m_2)}{N_1 N_2}} = \sum_{n_1=0}^{N_1-1} \sum_{n_2=0}^{N_2-1} x_{n_2 N_1 + n_1} e^{-j2\pi \frac{n_1 \times m_2}{N_1 N_2}} e^{-j2\pi \frac{n_1 \times m_1}{N_1}} e^{-j2\pi \frac{n_2 \times m_2}{N_2}}$$

Il y a deux façons de décomposer la transformée de Fourier discrète, les deux façons correspondant à la cascade d'une transformée de Fourier discrète à $N_1$ points et d'une transformée de Fourier discrète à $N_2$ points. C'est l'ordre dans lequel sont effectuées ces transformées de Fourier discrète qui diffère.

L'une des transformées de Fourier discrètes mises en jeu est pondérée par un oscillateur local permettant un décalage fin du spectre ; le terme exponentiel permettant cette translation est appelé « tweedle factor » :

$$\text{tweedle factor} = e^{-j2\pi\frac{n_1 \times m_2}{N_1 N_2}}$$

Par principe, l'indice de sortie variant le plus rapidement est $m_1$. Puisqu'il correspond à la transformée de Fourier discrète « rapide » c'est-à-dire non multiplexée. Ainsi, l'ordre de sortie des fréquences n'est pas l'ordre naturel : en effet, sortent d'abord les m valant 0 modulo $N_1$ puis les m valant 1 et ainsi de suite jusqu'aux m valant $N_1$ - 1 toujours 0 modulo $N_1$ ; cet ordre est appelé « bit reverse » car cela correspond à renverser la représentation binaire de l'indice pour obtenir le rang de sortie (pour un nombre de points en puissance de 2).

La réalisation de la transformée de Fourier discrète inverse, qui récupère les données fréquentielles en « bit reverse », s'effectue de façon duale, par retournement des opérations.

Selon un premier cas, la transformée de Fourier discrète à $N_1$ points (« rapide ») est suivie de la transformée de Fourier à $N_2$ points (« multiplexée »), ce qui correspond à :

$$X_{m_1 N_2 + m_2} = \sum_{n_1=0}^{N_1-1}\sum_{n_2=0}^{N_2-1} x_{n_2 N_1 + n_1} e^{-j2\pi\frac{(n_2 N_1 + n_1)\times(m_1 N_2 + m_2)}{N_1 N_2}} = \sum_{n_2=0}^{N_2-1} e^{-j2\pi\frac{n_2 \times m_2}{N_2}} \times \underbrace{\underbrace{\sum_{n_1=0}^{N_1-1} e^{-j2\pi\frac{n_1 \times m_1}{N_1}} \underbrace{e^{-j2\pi\frac{n_1 \times m_2}{N_1 N_2}}}_{\substack{\text{tweedle}\\\text{factor}}} \times x_{n_2 N_1 + n_1}}_{\text{FFT à } N_1 \text{ points}(\text{Radix} N_1)}}_{\substack{\text{FFT à } N_2 \text{ points}\\\text{multiplexé par } N_1\\(\text{Radix} N_2)}}$$

La réalisation de la transformée de Fourier s'effectue comme la cascade d'une transformée de Fourier à $N_1$ points non multiplexée et d'une transformée de Fourier à $N_2$ points multiplexée par $N_1$. Le « tweedle factor » est placé en tête devant le premier étage de transformée de Fourier.

Selon un deuxième cas, la transformée de Fourier discrète à $N_2$ points (« multiplexée ») est suivie de la transformée de Fourier à $N_1$ points (« rapide »), ce qui correspond à :

$$X_{m_1 N_2 + m_2} = \sum_{n_1=0}^{N_1-1}\sum_{n_2=0}^{N_2-1} x_{n_2 N_1 + n_1} e^{-j2\pi\frac{(n_2 N_1 + n_1)\times(m_1 N_2 + m_2)}{N_1 N_2}} = \underbrace{\sum_{n_1=0}^{N_1-1} e^{-j2\pi\frac{n_1 \times m_1}{N_1}} \times \underbrace{e^{-j2\pi\frac{n_1 \times m_2}{N_1 N_2}}}_{\substack{\text{tweedle}\\\text{factor}}} \times \underbrace{\sum_{n_2=0}^{N_2-1} e^{-j2\pi\frac{n_2 \times m_2}{N_2}} x_{n_2 N_1 + n_1}}_{\substack{\text{FFT à } N_2 \text{ points}\\\text{multiplexé par } N_1\\(\text{Radix} N_2)}}}_{\substack{\text{FFT à } N_1 \text{ points}\\(\text{Radix} N_1)}}$$

La réalisation s'effectue cette fois-ci comme la cascade d'une transformée de Fourier discrète à $N_2$ points multiplexée par $N_1$ et d'une transformée de Fourier discrète à $N_1$ points non multiplexée. Le « tweedle factor » est placé entre les deux étages de transformée de Fourier discrète. La première transformée de Fourier discrète réalisée étant multiplexée, cette décomposition s'accommode de données d'entrée parallélisées ; le multiplexage se transforme alors en traitement en parallèle.

Suivant l'une des versions classiques de décomposition en radix2, la FFT à 2M points de cette suite $a_n$ s'écrit :

$$b_m = \sum_{n=0}^{2M-1} a_n e^{-j2\pi nm/(2M)} = \sum_{n=0}^{M-1} a_n e^{-j2\pi nm/(2M)} + (-1)^m \sum_{n=0}^{M-1} a_{M+n} e^{-j2\pi nm/(2M)}$$

En particulier :

$$b_{2m+p} = \sum_{n=0}^{M-1} a_n e^{-j2\pi np/(2M)} e^{-j2\pi nm/M} + (-1)^p \sum_{n=0}^{M-1} a_{M+n} e^{-j2\pi np/(2M)} e^{-j2\pi nm/M}$$

Où

$$p = \begin{cases} 0 \\ 1 \end{cases}$$

soit :

$$b_{2m+p} = \text{FFT}_M\left(a_n e^{-j\pi np/M}\right) + (-1)^p \, \text{FFT}_M\left(a_{M+n} e^{-j\pi np/M}\right)$$

où $\text{FFT}_M$ désigne la FFT à M points.

Il est à noter que cette densité spectrale s'écrit également des deux façons suivantes qui en simplifieront la mise en œuvre :

$$b_{2m+p} = \text{FFT}_M\left(a_n e^{-j\pi np/M}\right) + \text{FFT}_M\left(a_{M+n} e^{-j\pi(M+n)p/M}\right)$$

et

$$b_{2m+p} = \text{FFT}_M\left(\left[(-1)^p a_n + a_{M+n}\right] e^{-j\pi(M+n)p/M}\right)$$

En notant $\rho_m$ la réponse spectrale du filtre, il est obtenu la réponse filtrée par transformation inverse :

$$c_k = \sum_{p=0}^{1}\sum_{m=0}^{M-1} b_{2m+p}\rho_{2m+p} e^{j2\pi k(2m+p)/(2M)} = \sum_{p=0}^{1} e^{j2\pi kp/(2M)} \sum_{m=0}^{M-1} b_{2m+p}\rho_{2m+p} e^{j2\pi km/M}$$

La réponse est calculée uniquement pour les points $0 \le k \le$ M-1 (du fait du repliement inhérent à la FFT) pour obtenir finalement :

$$c_k = \sum_{p=0}^{1} e^{j\pi kp/M} \, \text{IFFT}_M\left(b_{2m+p}\rho_{2m+p}\right)$$

où la $\text{IFFT}_M$ désigne la FFT inverse à M points.

*1.2 - REALISATION D'UN RETARD*

Il est connu que le gain complexe correspondant à un retard $\tau$ est $H(f) = e^{-j2\pi f\tau}$. Dès lors que l'on veut réaliser cette opération sur un signal échantillonné pour un retard différent d'un multiple de la période d'échantillonnage on se heurte au problème du repliement de la réponse fréquentielle qui par principe est nul quand $F_{ECH}\tau$ n'est pas entier. On doit alors chercher à réaliser le filtre présentant un gain complexe périodique de période $f_{ECH}$ et de réponse $H(f) = e^{-j2\pi f\tau}$ sur cette période.

Il peut être rappelé ici que, sur le plan du principe, décaler un signal numérisé $x_m$ d'un retard $\tau$ revient à interpoler le signal x par le filtre interpolateur de Shannon dont la réponse temporelle est $\text{sinc}(f_{ECH}t)$ où $\text{sinc}(x) = \sin(\pi x)/(\pi x)$ et à remplacer l'échantillon numéro m de valeur $x_m$ par $y_m = x(m\, T_{ECH} - \tau)$. Mathématiquement cela s'écrit :

$$y_m = \int_{-\infty}^{+\infty} \frac{\sin \pi f_{ECH}(mT_{ECH} - \tau - t)}{\pi f_{ECH}(mT_{ECH} - \tau - t)} \sum_{-\infty}^{+\infty} x_k \delta(t - kT_{ECH})dt = \sum_{-\infty}^{+\infty} x_k \frac{\sin \pi f_{ECH}(mT_{ECH} - \tau - kT_{ECH})}{\pi f_{ECH}(mT_{ECH} - \tau - kT_{ECH})}$$

La réponse temporelle du filtre numérique assurant le retard $\tau$ est donc :

$$h_n = \frac{\sin \pi f_{ECH}(nT_{ECH} - \tau)}{\pi f_{ECH}(nT_{ECH} - \tau)} = \frac{\sin \pi f_{ECH}\tau}{\pi} \times \frac{(-1)^n}{f_{ECH}\tau - n}$$

Par principe, ce filtre n'est pas réalisable puisque sa réponse temporelle s'étend de -∞ à +∞. En tronquant et pondérant sa réponse entre -N et +N on réalise un jeu de coefficients correspondant à un filtre qui assure un retard différentiel $\tau$ par rapport à un retard de référence égal à $N\,T_{ECH}$. La réponse fréquentielle de ce filtre est alors le repliement de la réponse fréquentielle de la pondération.

Quoiqu'il en soit la lenteur de la décroissance de $h_n$ avec l'indice n ($h_n \sim 1/n$) conduit à des longueurs très importantes dès lors qu'à la fois sont recherchées large bande (proche de la bande de Nyquist) et grande dynamique (bonne suppression des bandes images).

Les équations présentées ci-dessus indiquent que cette lenteur est une conséquence directe du fait que le gain complexe $e^{-j2\pi f \tau}$ associée à un retard $\tau$ est discontinu aux bornes de la bande d'échantillonnage dès lors que $\tau$ n'est pas un multiple de la période d'échantillonnage $1/f_{ECH}$. De la même façon, le gain complexe auquel correspondent les corrections d'égalisation des voies de réception n'est en général ni continu, ni continûment dérivable aux bornes de la bande d'échantillonnage si bien que, là encore, la durée de la réponse temporelle de ce filtre de correction est d'autant plus grande que la bande dans laquelle on veut assurer cette correction avec précision est plus proche de la bande de Nyquist associée à l'échantillonnage.

Il résulte de toutes ces observations que ce filtre conduit à une réponse temporelle infinie $h_n$ décroissant lentement avec l'indice n du fait de la discontinuité en bord de bande.

Or il est connu que la pondération d'une réponse permet de limiter son extension dans l'espace dual ; il est en effet courant de pondérer une réponse temporelle pour en limiter l'encombrement spectral inhérent à la discontinuité aux bornes du domaine d'échantillonnage. De façon duale, la pondération dans le domaine spectral, qui correspond à un filtrage, permet quant à elle de limiter grandement l'extension temporelle associée à la réalisation d'un retard non entier (en termes de périodes d'échantillonnage), en réduisant par filtrage la bande dans laquelle le retard sera opérationnel.

Ainsi, plus la bande dans laquelle le retard est assuré de façon précise est large, plus la longueur de la réponse temporelle du filtre FIR le réalisant est grande.

*1.3 - DEMODULATION IQ - FILTRAGE DE HILBERT*

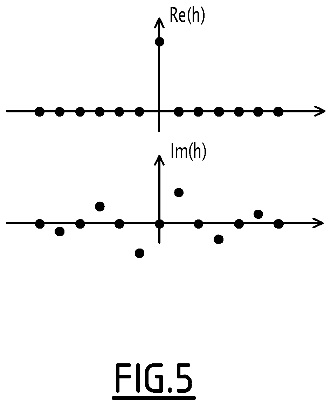

Par ailleurs, il est possible d'échantillonner les signaux réels sur porteuse (et non plus en bande de base après démodulation I/Q analogique). Dans ce cas, par principe, les fréquences positives du signal utile sont strictement contenues dans une des bandes de Nyquist de l'échantillonnage (c'est-à-dire comprises entre $k\,f_{ECH}/2$ et $(k+1)\,f_{ECH}/2$ où k est arbitraire). Après échantillonnage, la reconstitution du signal analytique passe alors par un filtrage, dit de Hilbert, qui permet d'éliminer le spectre des fréquences négatives. Habituellement, comme l'indique la figure 5 représentant la réponse temporelle d'un filtre de Hilbert (parties réelle et imaginaire), la réponse temporelle de ce filtre comprend une partie réelle limitée à un seul coefficient central et une partie imaginaire antisymétrique décroissant en 1/n et dont un échantillon sur deux est nul.

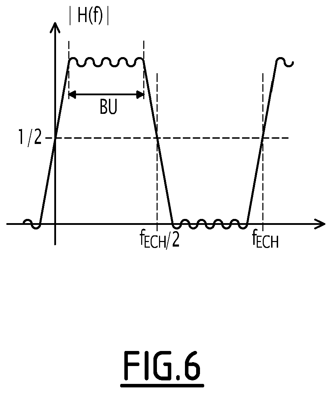

Ce faisant, comme indiqué sur la figure 6 qui illustre la réponse fréquentielle d'un filtre de Hilbert, le gain complexe vaut -6 dB à la fréquence nulle et à la fréquence de Nyquist; par ailleurs le niveau de la réjection des fréquences négatives est d'autant plus élevé que la durée de la réponse est importante.

Si le signal réel n'occupe pas toute la bande de Nyquist ou si le signal complexe n'occupe pas toute la bande d'échantillonnage, il est d'usage de filtrer la bande utile (notée BU sur la figure 6) occupée par le signal pour autoriser une étape ultérieure de décimation visant à ramener la fréquence d'échantillonnage au plus près de la bande utile. Dans ce cas-là, la réponse du filtre ressemble à celle du filtre de Hilbert, à ceci près que sa bande est plus étroite.

2 - DESCRIPTION D'EXEMPLES DE PROCEDES DE FORMATION

*2.1 - PRINCIPE GENERAL DU PROCEDE DE FORMATION*

Le procédé de formation peut être indifféremment appliqué directement sur signal réel après la conversion analogique-numérique, ou sur signal complexe, après retour en bande de base, démodulation I/Q et décimation partielle. Le procédé est destiné à réaliser conjointement les différentes étapes, l'égalisation des voies de réception, le retard et la pondération associés au dépointage et la limitation de la bande occupée.

Pour cela, le procédé est réalisé par les structures de filtrage présentées au paragraphe intitulé « Réalisation de filtres à réponses temporelles longues » ce qui permet de contrôler le filtrage dans le domaine spectral et de rendre les opérations indépendantes et multiplicatives.

Il est également possible de dupliquer l'opération de retard autant de fois que nécessaire pour créer la contribution d'une voie de réception à autant de faisceaux que requis.

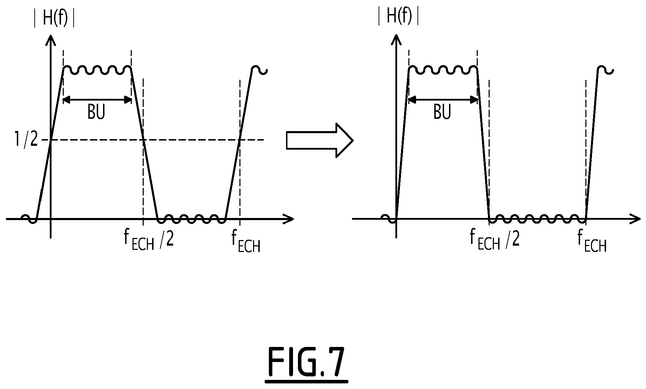

Il est à noter qu'il est souhaitable que la réponse du filtre de Hilbert ou celle du filtre limitant le spectre à la bande utile filtrent suffisamment les discontinuités associées aux opérations de retard et d'égalisation afin d'éviter que celles-ci n'introduisent des artéfacts notables causés par ces discontinuités spectrales. Ceci est représenté schématiquement sur la figure 7 qui montre la modification du filtre de Hilbert pour une élimination totale de la deuxième bande de Nyquist (graphe de gauche avant modification et graphe de droite après modification).

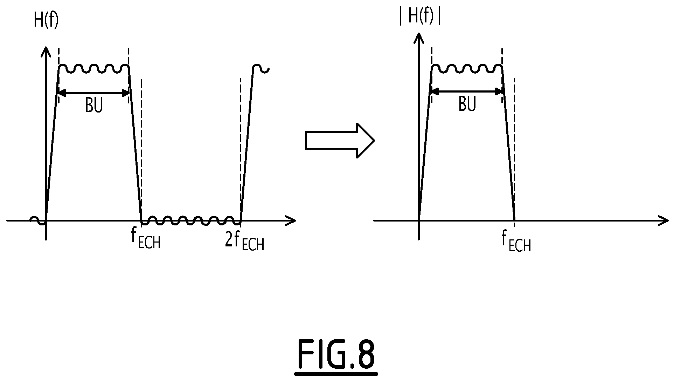

Dans le cas où le signal d'entrée est complexe et où le spectre du signal occupe la quasi-totalité de la bande d'échantillonnage ($f_{ECH}$), il convient de filtrer dans le but d'éviter les problèmes liés à la discontinuité de la réponse fréquentielle du retard aux bornes de la bande d'échantillonnage. Dans ce cas la réponse temporelle du filtre est un sous-échantillonnage par 2 de celle d'un filtre similaire au filtre de Hilbert, mais conçu à fréquence double. La figure 8 illustre cela en montrant le filtre requis lorsque le signal d'entrée est complexe pour éviter les problèmes liés à la discontinuité de la réponse fréquentielle du retard aux bornes de la bande d'échantillonnage.

*2.2 - DESCRIPTION D'UN EXEMPLE DE PROCEDE DE FORMATION DE FAISCEAUX*

*2.2.1 - Cas des figures 9 et 10*

Il est proposé d'exploiter les architectures de filtres présentées aux figures 2 à 4 comme élément constitutif d'une architecture de système de formation de faisceaux.

Le système de formation de faisceaux est un système propre à former Q faisceaux, Q étant un entier non nul.

Chaque faisceau peut ainsi être repéré par un indice q, indice qui est un entier compris entre 1 et Q.

Il est à noter que dans un mode de réalisation particulier de ce cas de figure, Q peut valoir 1.

Le système de formation de faisceau comporte P chaînes de réception munies chacune d'antenne. P est un entier supérieur ou égal à 2.

Une chaîne de réception est un ensemble formé par une antenne et un circuit de traitement.

Le terme voie de réception est parfois utilisé pour le circuit de traitement. Ce terme sera utilisé dans la suite de la description.

Chacune des P voies de réception est ainsi propre à recevoir des signaux provenant d'une antenne respective.

Par ailleurs, chacune des P voies de réception comportent des moyens permettant de réaliser des opérations qui seront décrites ultérieurement. En particulier, chaque voie de réception comporte des moyens d'analyse spectrale, la formation de faisceaux ayant ici la particularité de comporter des opérations dans le domaine spectral, et plus spécifiquement les opérations de dépointage.

Chaque voie de réception peut être repérée par un indice p qui est compris entre 1 et P.

On notera :

- $C_p(m)$ la correction complexe à appliquer sur la voie de réception p dans le but de l'égaliser avec les autres voies de réception avec une résolution égale à $f_{ECH}/(2M)$, l'indice m qui, modulo 2M, est compris entre 0 et 2M-1, est représentatif de la fréquence,
- $\tau_p^{(q)}$ le retard à appliquer sur la voie de réception p pour former le faisceau q et, si $f_0$ est la fréquence porteuse ramenée sur le continu après échantillonnage, $\varphi_p^{(q)}(m) = -2\pi ( f_0 + m f_{ECH} / (2M) ) \tau_p^{(q)}$ est la phase spectrale correspondante,
- $\alpha_p^{(q)}$ un éventuel coefficient réel de pondération de l'ouverture de l'antenne, pour chaque indice q de faisceau formé, la loi de pondération $\alpha_p^{(q)}$ étant destinée à améliorer le niveau des lobes du diagramme de directivité de l'antenne ainsi formée numériquement, et
- $H^{(q)}(m)$ le gain complexe associé à la limitation de bande spécifique à chaque faisceau formé (filtre de Hilbert ou de limitation du spectre à la bande utile) ; ce gain complexe est issu d'une FFT à 2M points de sa réponse temporelle causale.

Cela peut s'interpréter comme une opération matricielle dépendant de la fréquence qui relie le vecteur des signaux issus des voies de réception au vecteur des faisceaux formés. Cette opération se décompose comme le produit de trois matrices dont la première et la dernière sont diagonales :

- [ C ] la matrice diagonale P x P des corrections d'égalisation des voies de réception,
- [ $\alpha e^{j\phi}$ ] la matrice pleine Q x P des phases spectrales associées aux retards et des coefficients de pondération d'ouverture, et
- [ H ] la matrice diagonale Q x Q des filtrages de limitation de bande.

Si [ X ] est le vecteur P x 1 des densités spectrales de puissance (parfois dénommées sous l'acronyme DSP) des voies de réception et si [ Y ] est le vecteur Q x 1 des densités spectrales de puissance des canaux formés, l'opération s'écrit

alors :

$$[ Y ]_{Qx1} = [ H ]_{QxQ} \, x \, [ \alpha e^{j\phi} ]_{QxP} \, x \, [ C ]_{PxP} \, x \, [ X ]_{Px1}$$

(les matrices et vecteurs dépendent de la fréquence d'une antenne).

On remarquera que ces trois fonctions de filtrage, qui sont appliquées de façon multiplicative du fait de la structure de filtrage, puisqu'opérées dans le domaine spectral, s'enchaînent dans un ordre bien particulier qui est celui de la décomposition matricielle citée :

- l'égalisation des voies [C] est appliquée en premier, après les FFT qui forment le passage dans le spectre, puis
- le retard ainsi que la pondération d'ouverture de l'antenne [ $\alpha e^{j\phi}$ ], opération dupliquée sur chaque voie de réception autant de fois qu'il y a de faisceaux à former, et enfin
- la limitation de bande spécifique [ H ] appliquée sur chaque faisceau formé, c'est-à-dire après sommation des différentes contributions issues de toutes les voies de réception.

Les figures 9 et 10 décrivent un système de formation de faisceaux dans le cas particulier où P et Q sont égaux (ici égal à 4), c'est-à-dire qu'il s'agit d'un formateur de 4 faisceaux à partir de 4 voies de réception.

Dans ces figures, pour plus de lisibilité, les traits sont de plus en plus large en fonction de l'indice p ou q considéré.

Le système de formation de faisceaux est référencé 10 et comporte 4 voies de réception $12_1$, $12_2$, $12_3$, $12_4$.

De manière schématisée, le système de formation 10 comporte, pour chaque voie de réception 12, une entrée 14 opérant dans le domaine temporel, un circuit de traitement 16 opérant dans le domaine fréquentiel et une sortie 18 opérant dans le domaine temporel.

L'entrée 14, le circuit de traitement 16 et la sortie 18 mettent en œuvre des opérations et peuvent s'interpréter comme des produits programmes d'ordinateur.

En particulier, ils peuvent être réalisés au moins en partie par un calculateur, tel un circuit logique programmable. Un tel circuit est souvent désigné sous l'acronyme FPGA, acronyme anglais de l'expression *« Field-Programmable Gate Array »,* réseau de portes programmables in situ.

Selon un autre exemple, ils forment un circuit intégré propre à une application. Un tel circuit est souvent désigné par l'acronyme ASIC (acronyme de l'anglais *« Application-Specific Integrated Circuit »,* signifiant « circuit intégré propre à une application »).

Cela signifie que ces éléments réalisent une fonction de formation de faisceaux par le calcul, cette fonction étant parfois désignée par l'acronyme FFC. L'acronyme DBF est parfois utilisé en référence à la dénomination anglaise correspondante de *« Digital BeamForming »,* signifiant « formation de faisceaux numériques »).

Dans l'exemple décrit, le circuit de traitement 16 comporte deux voies de calcul 20 et 22 qui sont reliées chacune à l'entrée 14 par une unité d'application de $FFT_M$ 24 et à la sortie 18 par une unité d'application de $IFFT_M$ 26.

Les deux voies de calcul 20 et 22 opèrent des opérations similaires sur les points ayant respectivement un indice pair (voie de calcul 20) et impair (voie de calcul 22).

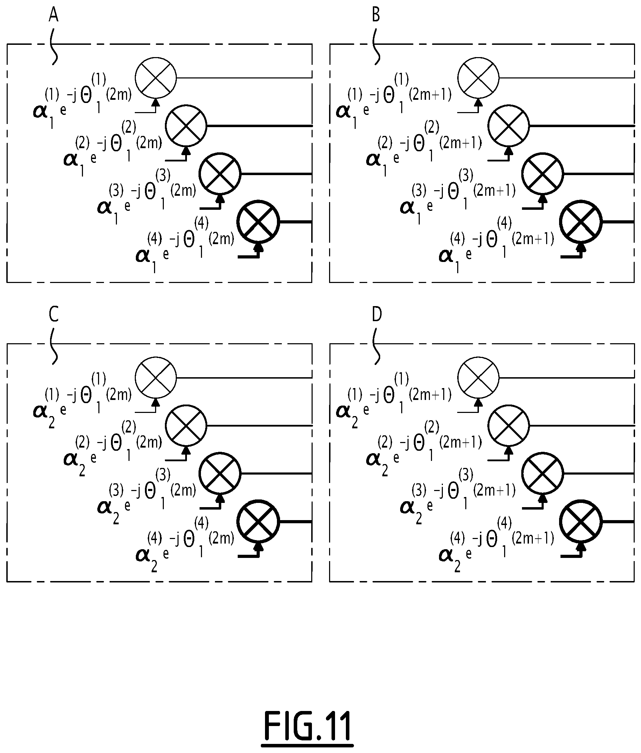

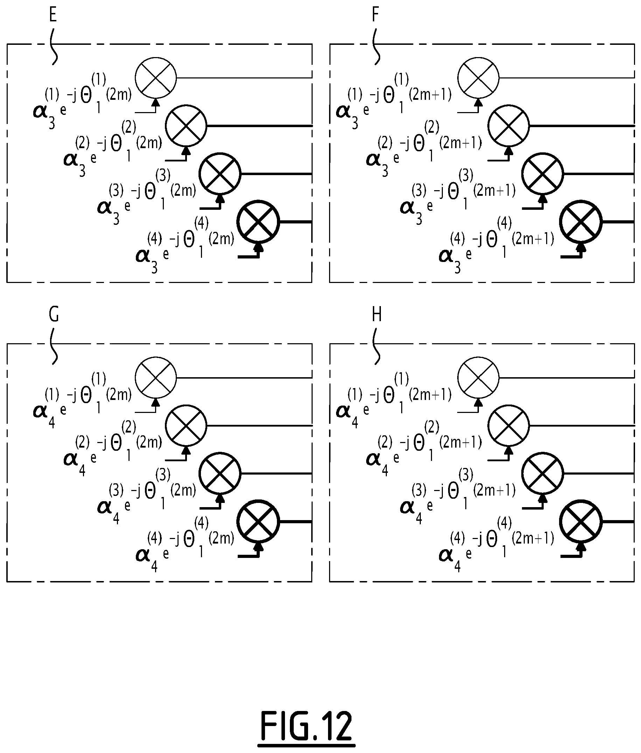

Sur chaque voie, on trouve une unité d'égalisation 28, une unité de retard et pondération 30 (représentée en plus grand sur les parties A à H des figures 11 et 12), une unité de sommation 32 et une unité de limitation de bande 34. Ces notations sont seulement introduites sur la première voie de calcul 20 de la première voie de réception $12_1$ pour garantir une certaine lisibilité des figures 9 et 10.

L'unité d'égalisation 28 applique la matrice C précitée, avec la notation $C_p(2m)$ s'il s'agit de la première voie 20 (référence au fait que les indices pairs sont traités) et la notation $C_p(2m+1)$ s'il s'agit de la deuxième voie 22 (référence au fait que les indices impairs sont traités).

Comme visible sur les figures 11 et 12, l'unité de retard et pondération 30 applique des coefficients de retard et de pondération autant de fois qu'il y a de faisceaux à former, c'est-à-dire 4 ici.

L'unité de sommation 32 de la première voie 20 vient sommer les contributions obtenues après l'unité de retard et pondération 30 provenant des premières voies 20 de chaque voie de réception 12.

Pour le cas de la première voie 20 de la première voie de réception $12_1$, cela signifie que l'unité de sommation 32 vient sommer la sortie de l'unité de retard et pondération 30 de la première voie $20_1$ (l'indice 1 indique qu'il s'agit de celle de la première voie de réception $12_1$), la sortie de l'unité de retard et pondération 30 de la première voie $20_2$, la sortie de l'unité de retard et pondération 30 de la première voie $20_3$ et la sortie de l'unité de retard et pondération 30 de la première voie $20_4$.

Similairement, l'unité de sommation 32 de la deuxième voie 22 vient sommer les contributions obtenues après l'unité de retard et pondération 30 provenant des deuxièmes voies 22 de chaque voie de réception 12.

Pour le cas de la deuxième voie 22 de la première voie de réception $12_1$, cela signifie que l'unité de sommation 32 vient sommer la sortie de l'unité de retard et pondération 30 de la deuxième voie $22_1$, la sortie de l'unité de retard et pondération 30 de la deuxième voie $22_2$, la sortie de l'unité de retard et pondération 30 de la deuxième voie $22_3$ et la sortie

de l'unité de retard et pondération 30 de la deuxième voie $22_4$.

Ceci étant vrai pour chaque unité de sommation 31, on comprend bien dès lors qu'une interconnexion 36 relativement complexe est visible entre les unités de retard et pondération 30 et les unités de sommation 32.

L'unité de limitation de bande 34 applique la matrice H et les mêmes notations que pour la matrice C sont utilisées.

La sortie 18 effectue une recombinaison des voies de calcul 20 et 22 en utilisant une unité de décalage 38 et un additionneur 40.

Il est à noter que, suivant les cas d'application, le retard à introduire sur les différentes voies pour dépointer un faisceau peut être supérieur à une période d'horloge. Par exemple, pour une antenne couvrant une bande relative de 20%, et présentant 32 x 32 soit 1024 éléments, et une fréquence d'échantillonnage passant la bande totale de l'antenne, le retard max associé à la formation de faisceaux suivant les deux directions vaut $2 \times 16 \times (1/f_0/2) = 16 \, (f_{ECH}/B) \times (B/f_0) / f_{ECH} = 6{,}4 / f_{ECH}$. On pourrait alors imaginer réaliser la partie entière de ce retard de façon numérique dans le domaine temporel, mais cela n'est plus possible dès lors qu'on est passé en fréquence pour simplifier la réalisation simultanée de plusieurs faisceaux distincts. Ce retard doit donc être intégralement opéré dans le spectre et il y a lieu de le prévoir dans la conception des filtres, dans le sens où leur réponse temporelle accrue du retard max doit rester inférieure à $N_{FFT}/f_{ECH}$.

### 2.2.2 - Généralisation

Les éléments qui viennent d'être décrits peuvent aisément se généraliser ce qui conduit au procédé de formation maintenant explicité.

Dans un cas général, le procédé de formation de Q faisceaux est mis en œuvre par un système de formation de faisceaux comprenant P voies de réception en liaison chacune avec une antenne respective, Q étant un entier non nul et P étant un entier supérieur ou égal à 2. Le procédé comporte, pour chaque voie de réception, les étapes de :

- réception d'un signal reçu par l'antenne,
- génération de deux voies de calcul par somme et différence du signal issu de la voie de réception et de ce même signal retardé de M périodes,
- réalisation sur la voie différence d'un décalage fréquentiel de $f_{ECH}/2M$ par application multiplicative d'un signal $e^{-jn\text{Pi}/M}$, n étant un entier allant de 0 à M-1, M étant un entier strictement supérieur à 2,
- mise en œuvre de premières opérations sur la première voie de calcul, les premières opérations comportant :

  - l'application d'une transformée de Fourier discrète à M points sur un signal issu du signal transmis pour obtenir M points dans le spectre du signal issu du signal transmis, M étant un entier strictement supérieur à 2, chaque point du spectre du signal transmis correspondant à des indices pairs d'une analyse spectrale à 2*M points du signal issu du signal transmis et étant repérés de manière bijective par un indice qui est un nombre pair compris entre 0 et 2*M-1,
  - l'application dans le spectre d'une fonction d'égalisation de voies sur les M points, pour obtenir des points égalisés,
  - l'application dans le spectre d'un retard sur les points égalisés pour générer Q séries de M points retardés (par le biais d'une multiplication avec une exponentielle linéaire en phase), et

- mise en œuvre de deuxièmes opérations sur la deuxième voie de calcul, les deuxièmes opérations comportant :

  - l'application d'une transformée de Fourier discrète à M points sur le signal issu du signal transmis pour obtenir M points dans le spectre du signal issu du signal transmis, chaque point du spectre du signal issu du signal transmis correspondant à des indices impairs d'une analyse spectrale à 2*M points du signal issu du signal transmis et étant repérés de manière bijective par un indice qui est un nombre impair compris entre 0 et 2*M-1,
  - l'application dans le spectre d'une fonction égalisation de voies sur les M points, pour obtenir des points égalisés, et
  - l'application dans le spectre d'un retard sur les points égalisés pour générer Q séries de M points retardés (par le biais d'une multiplication avec une exponentielle linéaire en phase),

- formation de chaque faisceau à partir des séries de M points retardés générées, la formation comprenant, pour chaque faisceau :
- la mise en œuvre de troisièmes opérations, les troisièmes opérations comprenant:

  - la sommation des séries de M points retardés provenant de chaque première voie de calcul d'une voie de réception, pour obtenir des points sommés,
  - l'application d'une fonction de limitation de bande sur les points sommés pour obtenir des points limités, et

- l'application d'une transformée de Fourier discrète inverse à M points sur les points limités, pour obtenir un premier signal de sortie,

- la mise en œuvre de quatrièmes opérations, les quatrièmes opérations comprenant:

  - la sommation des séries de M points retardés provenant de chaque seconde voie de calcul d'une voie de réception, pour obtenir des points sommés,
  - l'application d'une fonction de limitation de bande sur les points sommés à traiter pour obtenir des points limités, et
  - l'application d'une transformée de Fourier discrète inverse à M points sur les points limités, pour obtenir un deuxième signal de sortie, et

- la translation fréquentielle du deuxième signal de sortie pour obtenir un signal de sortie translaté
- la recombinaison du premier signal de sortie et du deuxième signal de sortie translaté pour obtenir le faisceau formé.

Dans certains cas particuliers, le procédé peut également présenter les propriétés qui suivent :

- les premières et deuxièmes opérations comportent également l'application d'une pondération d'ouverture de l'antenne de la voie de réception considérée.
- le signal reçu étant échantillonné à une fréquence d'échantillonnage, la fonction égalisation présente une résolution égale au ratio de la fréquence d'échantillonnage par 2M ; dans une numérotation de 0 à 2M-1 les points pairs sont appliqués sur la première voie de calcul et les points impairs sur la seconde voie de calcul.
- la fonction de limitation est obtenue par application d'une transformée de Fourier discrète à 2*M points d'une réponse temporelle de 2*M points exclusivement contenue dans les temps positifs (c'est-à-dire nulle sur les M derniers points).

## 2.3 - DESCRIPTION D'UN EXEMPLE DE PROCEDE DE FORMATION DE FAISCEAUX

Dans cet autre exemple de procédé de formation de faisceaux, le procédé permet également d'optimiser le volume des informations de sortie en réduisant le débit de chaque faisceau en fonction de sa bande utile et en multiplexant, sur un même canal de sortie, des faisceaux de même bande inférieure au débit du canal.

En effet, si la bande de réception d'un faisceau donné est notablement plus faible que $f_{ECH}/2$ pour des signaux réels et $f_{ECH}$ pour des signaux complexes, il est souhaitable de décimer le signal par un facteur entier ou non pouvant aller jusqu'au rapport des bandes ; cela n'est possible de façon simple, bien sûr, que si ce facteur est un entier supérieur à 2 et de préférence une puissance de 2.

### 2.3.1 - Décimation par 2 (par exemple, passage de réel en I/Q)

Par exemple, lorsque le signal d'entrée est réel, il est d'usage de décimer par deux le signal après filtrage de Hilbert dans le but de réduire le flot d'information ; cela est rendu possible par le fait que les fréquences négatives ont été éliminées du spectre. Compte tenu de cela, on s'attachera à ne restituer le signal que pour les temps pairs en sortie des IFFT à M points. Si $H_m$ est l'entrée de l'IFFT et $h_n$ sa sortie, on peut alors écrire la relation suivante, par le fait même que les fréquences négatives sont éliminées par le filtre à un niveau suffisamment bas pour pouvoir être considérées comme nulles au sens de la dynamique instantanée :

$$h_{2n} = \sum_{0}^{M-1} H_m e^{j2\pi \frac{2nm}{M}} = \sum_{0}^{M-1} H_m e^{j2\pi \frac{nm}{M/2}} = \sum_{0}^{M/2-1} H_m e^{j2\pi \frac{nm}{M/2}}$$

Ce qui exprime que les points pairs, seuls retenus, sont constitués par des IFFT à M/2 points des seules fréquences positives.

Or la sortie naturelle de la FFT s'effectue en « bit reverse », ce qui consiste, pour une FFT à M points, à sortir alternativement des fréquences positives et des fréquences négatives, plus précisément un point de fréquence positive $H_m$ immédiatement suivi du point de fréquence négative $H_{m+M/2}$. La restriction de la sortie de la FFT aux seules fréquences positives apparaît alors comme une décimation de cette sortie par 2, ce qui traduit que le fait de sortir le spectre en « bit reverse » est l'expression de la dualité qui existe entre sous-échantillonnage par 2 dans le domaine temporel et sous-bandes positives/négatives dans le spectre.

Cette particularité pourra alors être avantageusement mise à profit pour multiplexer temporellement deux faisceaux différents ; cela est rendu possible grâce à l'architecture interne de la DFT à M = $2^N$ points formant une IFFT. DFT est l'acronyme de la dénomination anglaise de *« Discrete Fourier Transform »* qui signifie « Transformée de Fourier Discrète ».

En effet, il est connu de décomposer avantageusement la DFT inverse à $2^N$ points en N étages successifs dits « radix2 », formant chacun une DFT inverse à 2 points (qui s'identifie à la DFT à 2 points) et séparés par des étages de rotation de phase variable dans le temps appelés « tweedle factors ». Dans une telle décomposition, ces DFT inverses à 2 points s'opèrent sur des données dont le taux de multiplexage croît le long de l'IFFT (1 pour le premier étage, 2 pour le second, 4 pour le troisième, etc ...).

Du fait de la sortie en « bit reverse », $H_m$ et $H_{m+M/2}$ sont deux points du spectre, l'un dans les fréquences positives et l'autre dans les fréquences négatives, qui sont délivrés successivement en sortie de FFT à M points. De ce fait, de façon formelle, la sortie de l'IFFT à M points s'écrit :

$$\begin{bmatrix} h_{2n} \\ h_{2n+1} \end{bmatrix} = \sum_{m=0}^{-1+M/2} e^{+j2\pi\frac{nin}{M'2}} \times \begin{cases} 1 & \times & \left( H_m + H_{m+M/2} \right) \\ e^{+j\pi\frac{m}{M/2}} & \times & \left( H_m - H_{m+M/2} \right) \end{cases}$$

On constate, qu'effectivement, la première étape de cette IFFT à M points consiste en une DFT des 2 points consécutifs $H_n$ et $H_{n+M/2}$ dont le résultat, somme et différence, sort également de façon consécutive. Ce résultat est ensuite multiplié par un « tweedle factor » différent pour les deux points ainsi créés.

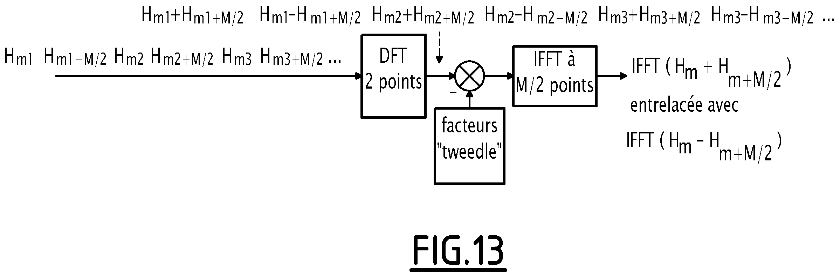

On constate également que les deux résultats ainsi multipliés forment deux séries de points entrelacées qui, chacune, subissent une IFFT à M/2 points, ce qui conduit au schéma de la figure 13, qui illustre la décomposition d'une IFFT à M points en une DFT à 2 points et une IFFT à M/2 points.

Comme le montre la figure 13, une IFFT à M = $2^N$ points peut être considérée comme la cascade d'une DFT non multiplexée à 2 points et d'une IFFT à M/2 = $2^{N-1}$ points multiplexée par 2, ce qui revient à effectuer simultanément 2 IFFT distinctes à M/2 = $2^{N-1}$ points sur deux séries de points entrelacées.

Cela permet donc, moyennant le court-circuit de l'étage de DFT à 2 points de tête et de l'étage de « tweedle factor » qui le suit directement, d'utiliser un opérateur IFFT à M points, soit comme tel, soit comme un opérateur IFFT à M/2 points multiplexé par 2, c'est-à-dire travaillant de façon multiplexée sur 2 séries de points entrelacées.

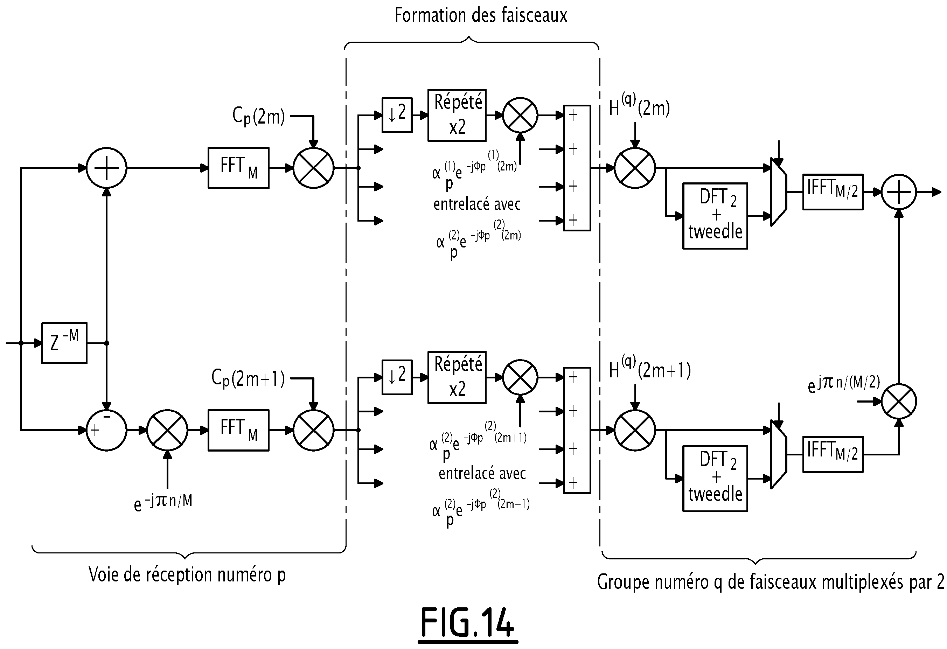

C'est cette capacité qui peut être avantageusement mise en œuvre pour multiplexer sur la même sortie 2 faisceaux distincts décimés par 2 comme le montre la figure 14 qui illustre un système de formation de faisceaux avec multiplexage de 2 faisceaux décimés par 2.

Dans ce cas, l'oscillateur local numérique $e^{+j\pi n/(M/2)}$ est adapté pour être maintenu pendant 2 périodes (taux du multiplexage ici).

_Décimation par $2^K$ de la bande comprise entre 0 et -1 + $2^{N-K}$_

En reproduisant K fois la décomposition présentée au paragraphe précédent, on peut exploiter le fait qu'en sortie d'une FFT à M = $2^N$ points, se présentent successivement les points de fréquence $H_{m+k.M/2^K}$ pour $0 \leq k \leq -1 + 2^K$.

Par exemple, en décomposant de la même façon l'IFFT à M/2 points en une DFT à 2 points, un étage de « tweedle factor » et une IFFT à M/4 points on peut alors également traiter de façon multiplexée 4 séries de points entrelacées dès lors que seules les fréquences de 0 à -1 + M/4 sont conservées et qu'on peut donc décimer par 4 après avoir appliqué le filtrage anti-repliement qui élimine les autres fréquences.

En généralisant cette démarche, il est possible de considérer de façon plus générale qu'une IFFT à M = $2^N$ points est la cascade d'une DFT inverse à $2^K$ points non multiplexée, d'un étage de « tweedle factors » et d'une IFFT à $2^{N-K}$ points multiplexée par $2^K$, ce qui revient à effectuer simultanément $2^K$ IFFT à $2^{N-K}$ points distinctes sur $2^K$ séries de points entrelacées.

Ainsi, de proche en proche, moyennant le court-circuit de l'étage de DFT inverse à $2^K$ points de tête et de l'étage de « tweedle factor » qui le suit directement, il est possible d'également traiter de façon multiplexée $2^K$ séries de points entrelacées par une même IFFT multiplexée par $2^K$, dès lors que seuls les points de fréquences de 0 à -1 + M/$2^K$ sont conservés et qu'on peut donc décimer par $2^K$. La capacité décrite précédemment pour une décimation par 2 et un multiplexage de 2 faisceaux peut ainsi être étendue à une décimation par $2^K$ et un multiplexage de $2^K$ faisceaux différents.

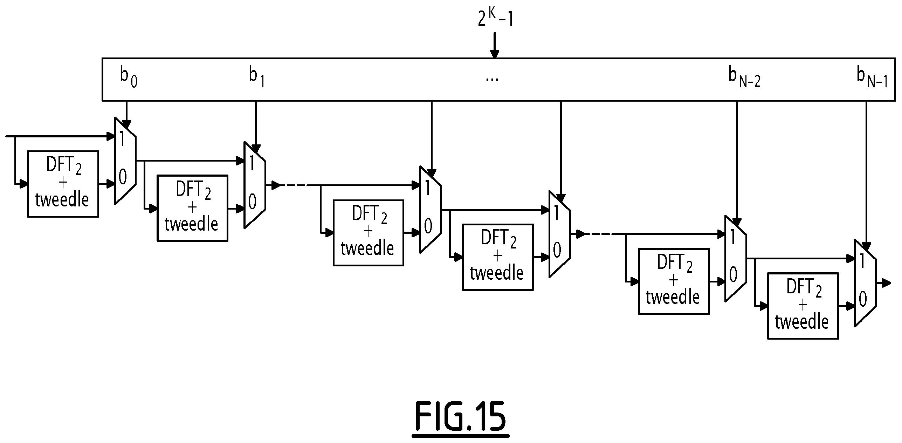

Une manière d'obtenir cela est représentée à la figure 15 qui montre la modification de l'IFFT à $2^N$ points en vue du multiplexage de $2^K$ faisceaux décimés par $2^K$. Comme le montre cette figure 15, il suffit de doter l'IFFT à $2^N$ points d'un ensemble de commutateurs permettant, via un adressage adéquat, d'entrer dans l'IFFT à l'endroit requis pour opérer un traitement IFFT à $2^{N-K}$ points opérant sur $2^K$ données multiplexées. L'adressage des différents commutateurs s'effectue par le biais de la description binaire de $2^K$ - 1.

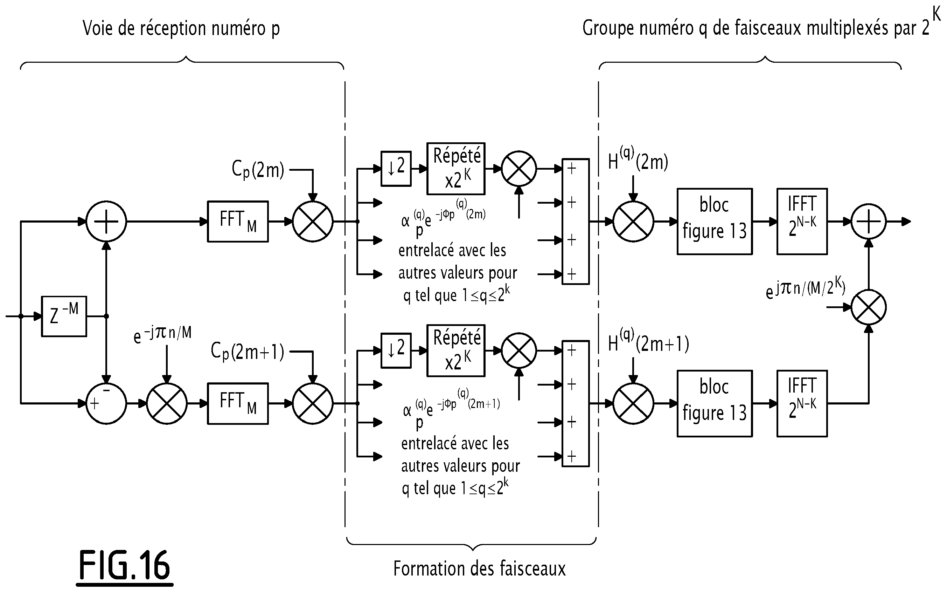

Un tel bloc peut être intégré dans le système de formation de la figure 16 pour obtenir de le faire fonctionner avec un taux de décimation/multiplexage de $2^K$. Le bloc est indiqué par « bloc figure 15 » dans la figure 16 qui présente un tel système de formation généralisé.

### 2.3.2 - Cas de bandes non comprises entre 0 et -1 + $2^{N-K}$

On notera bit_reverse(k,K) la fonction qui associe à k le nombre entier donné par le retournement des bits de la description de k sur K bits.

On pourra noter que bit_reverse(bit_reverse) est la fonction identité.

Par ailleurs, on aura par exemple :

- bit_reverse(0,K) = 0.
- bit_reverse($2^{K-1}$,K) = 1 et,

plus généralement, bit_reverse($2^{K-M}$,K) = 2M-1 pour $1 \leq M \leq K$,

- bit_reverse(2k+1,K) = bit_reverse(2k,K) + $2^{K-1}$ pour $0 \leq k \leq 2^{K-1}$ - 1.

D'une manière générale la bande d'intérêt à conserver, constituée de $2^{N-K}$ cases, m + k x $2^{N-K}$ et m - 1 + (k+1) x $2^{N-K}$ avec $0 \leq m \leq 2^{K}$ - 1:

- le cas m = k = 0 correspond au paragraphe précédent dans lequel la bande est comprise entre 0 et -1 + $2^{N-K}$,
- si m = 0 et k ≠ 0, la bande d'intérêt correspond à l'une des sous-bandes naturelle de la FFT ; les cases qui la composent sortent alors de façon périodique mais avec un décalage égal à bit_reverse(k,K),
- Dès que m ≠ 0, les différentes cases constituant la bande d'intérêt ne sortent plus de façon périodique.

Bien que ces trois cas conduisent à des différences quant au comportement de l'ordre de sortie des données, on peut néanmoins rassembler l'ensemble de ces trois cas de fonctionnement sous un seul et même mode opératoire.

Il suffit pour cela de :

- lire le spectre aux seuls instants correspondant aux cases fréquences constituant la bande utile, c'est-à-dire aux indices n tels que :

$$n_{MIN} = m + k\ 2^{N-K} \leq bit\_reverse(n,2^N) \leq n_{MAX} = m - 1 + (k+1)\ 2^{N-K}$$

- maintenir la valeur jusqu'à la valeur échantillonnée suivante, et
- ré-échantillonner le signal ainsi obtenu aux instants n x $2^{K}$ - 1.

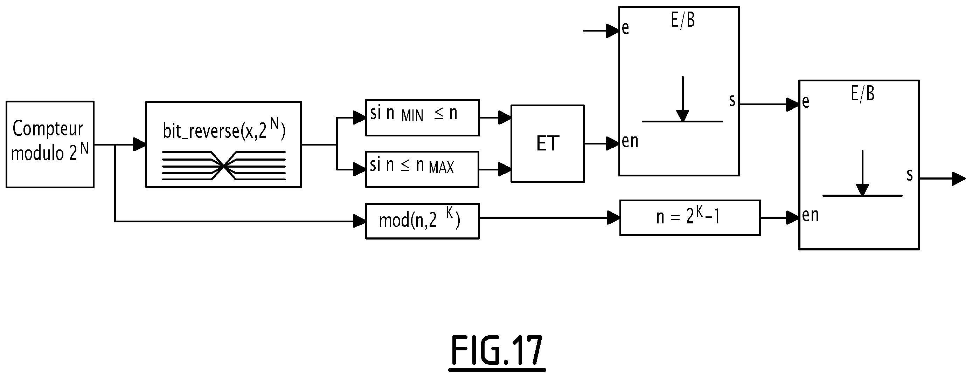

Une implémentation d'un tel mode opératoire est représenté sur la figure 17 qui représente un dispositif de recalage fréquentiel de la bande décimée comprenant notamment un compteur, une unité de bit inversé (bit reverse) et deux échantillonneurs-bloqueurs.

Ce faisant, on introduit une latence de réalisation de $2^{K}$ coups d'horloge. Dans l'exemple de la figure 17, il est supposé qu'il n'y a aucune latence de réalisation, ces latences étant éventuellement prises en compte par l'utilisation de dispositifs connus de l'homme du métier. Pour ne pas rompre le synchronisme des opérations qui suivent et conduire à une latence fixe quel que soit le taux de multiplexage, la compensation de cette latence peut, par exemple mais non exclusivement, s'opérer par l'application d'un retard complémentaire égal à $2^N$ -$2^K$ coups d'horloge sur le signal ainsi obtenu.

On crée ainsi un repliement de la bande utile dans la bande sous-échantillonnée [ 0 - $f_{ECH}$/$2^K$ ]. En effet, l'ordre des données en sortie de FFT est le suivant :

- d'abord les $2^K$ échantillons 0 de chacune des $2^K$ sous-bandes, ces sous-bandes apparaissant dans l'ordre fixé par bit_reverse(x,$2^K$), puis
- des autres échantillons, délivrés par paquets successifs de $2^K$ valeurs correspondant chacun à un même indice dans l'ensemble des sous-bandes, l'ordre des indices étant fixé par bit_reverse(x,$2^{K-N}$).

De ce fait, le premier échantillon d'intérêt (c'est-à-dire à appartenir à la bande utile) à sortir de la FFT est l'échantillon tel que (m + k x $2^{N-K}$) modulo $2\pi$ est nul, c'est-à-dire l'échantillon 0 de la k$^{ème}$ sous-bande dans le cas où m = 0 et de la (k+1)$^{ème}$ si m ≠ 0.

Lorsque m = 0, les échantillons parcourent la k$^{ème}$ sous-bande ; ils sont tous espacés de 2K. Si m ≠ 0, les échantillons d'intérêt appartiennent soit à la k$^{ème}$ sous-bande soit à la (k+1)$^{ème}$.

Mais, il se trouve qu'en sortie de FFT les échantillons se présentent par tranche de $2^K$ points, une tranche représentant l'ensemble des sous-bandes pour une même position donnée à l'intérieur de la sous-bande.

Par conséquent, en échantillonnant aux instants correspondant aux instants de sortie des $2^{N-K}$ points de la bande utile et en maintenant la valeur jusqu'au point de fréquence suivant, on dispose à la fin d'une tranche, c'est-à-dire à t = n x $2^K$ - 1, d'un échantillon de fréquence dont la position dans sa sous-bande d'origine est bien celle correspondant à la tranche en question.

Ce faisant, les derniers échantillons de la k$^{ème}$ sous-bande ont été placés à la fin de la bande ainsi créée ; cela correspond au repliement de la bande utile, positionnée à cheval sur deux sous-bandes, dans la bande sous-échantillonnée [ 0 - $f_{ECH}/2^K$ ].

Ce repliement correspond à une transposition de fréquence de -(k+1) $f_{ECH}/2^{N-K}$. Ainsi, le centre de la bande traitée se trouve-t-il donc situé à [ $2^{-N}$ (2m - 1) - $2^{-K}$ ] / $f_{ECH}$ / 2 dans la bande sous-échantillonnée [ 0 - $f_{ECH}/2^K$ ].

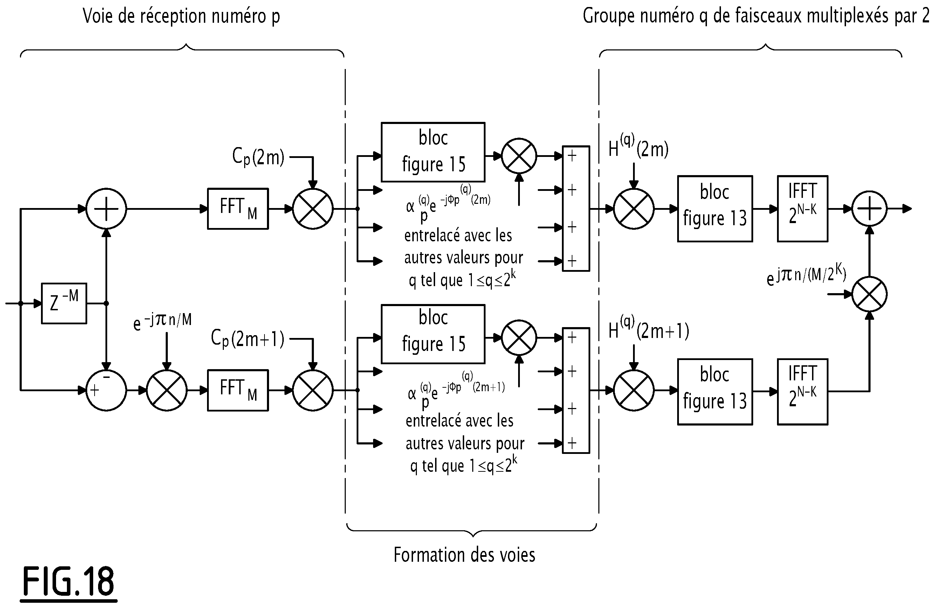

L'évolution qui en suit quant au système de formation de faisceaux avec multiplexage de $2^K$ faisceaux décimés par $2^K$ mais occupant maintenant une même bande située de façon quelconque dans la bande d'échantillonnage est présentée sur la figure 18, figure dans laquelle chaque bloc indiqué « bloc de la figure 17 » comporte les éléments de la figure 17.

Il est alors clair que, comme cela va être présenté dans les paragraphes qui suivent, les opérations de pointage de ces $2^K$ faisceaux multiplexés doivent être opérées de manière également multiplexée comme un ensemble de $2^K$ retards, et comme un éventuel ensemble de $2^K$ pondérations de l'ouverture de l'antenne.

### 2.3.3 - Décomposition en formations de faisceaux partielles successives

Lorsque le nombre de voies de réception devient important, il n'est pas possible d'effectuer l'intégralité des calculs dans un seul et même dispositif, tant du fait du nombre d'entrées/sorties que cela implique, que pour des raisons de puissance de calcul. Dans ce cas, il convient de répartir l'ensemble des calculs sur plusieurs dispositifs. La coupure naturelle de cette décomposition des calculs se situe au niveau de la sommation des contributions des différentes voies, opération associative par nature qui réalise par ailleurs en général une concentration des données du fait que le nombre de faisceaux formés est très souvent bien inférieur au nombre de voies de réception, d'autant plus que, dès que la bande utile d'un faisceau est réduite, il est opportun d'opérer un multiplexage tel que décrit précédemment dans cette section. Les voies de réception sont alors regroupées en sous-groupes et la partie de formation de faisceaux qui les concerne forme des faisceaux partiels ou sous-faisceaux, dont la recombinaison additive est par ailleurs effectuée dans un dispositif supplémentaire de regroupement, qui peut être lui-même fractionné en plusieurs étages successifs de concentration si le nombre d'entrées/sorties est trop grand.

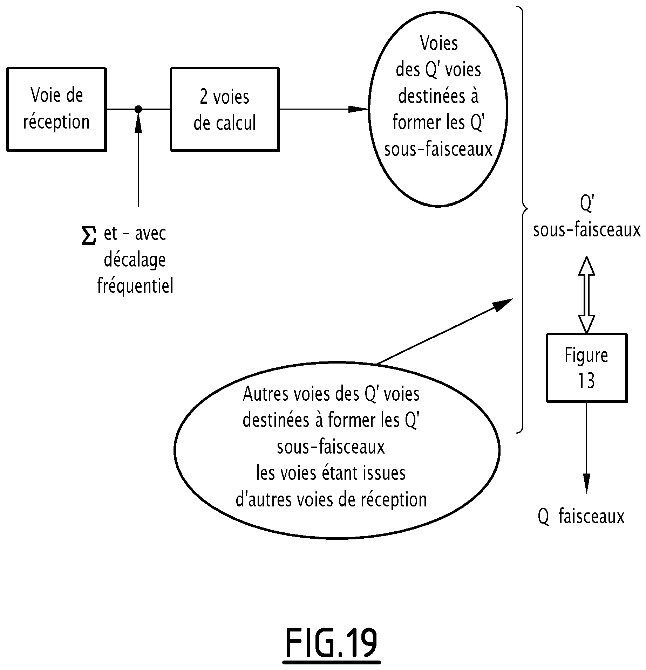

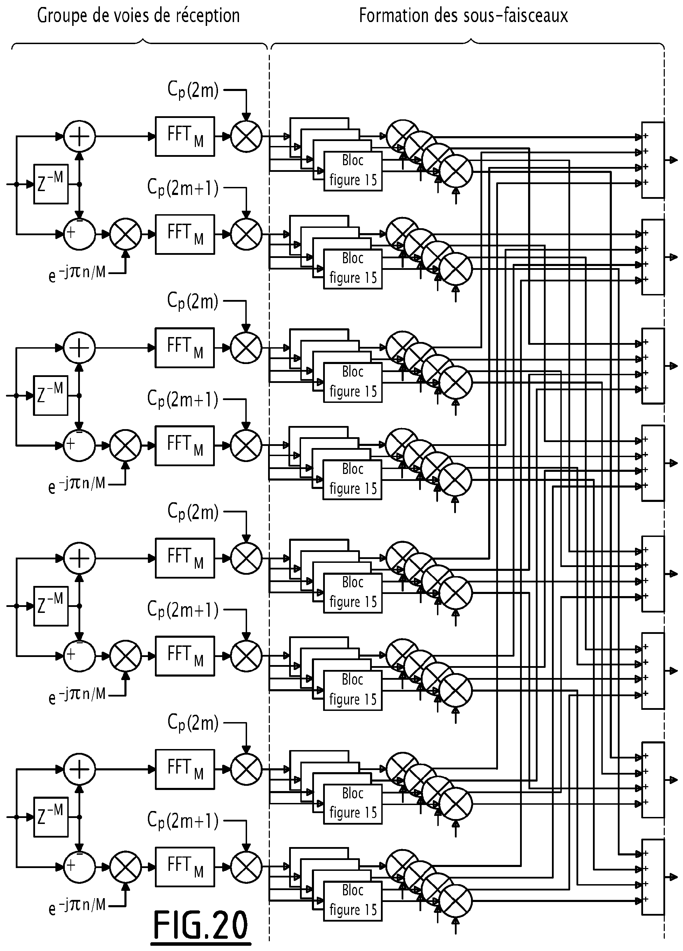

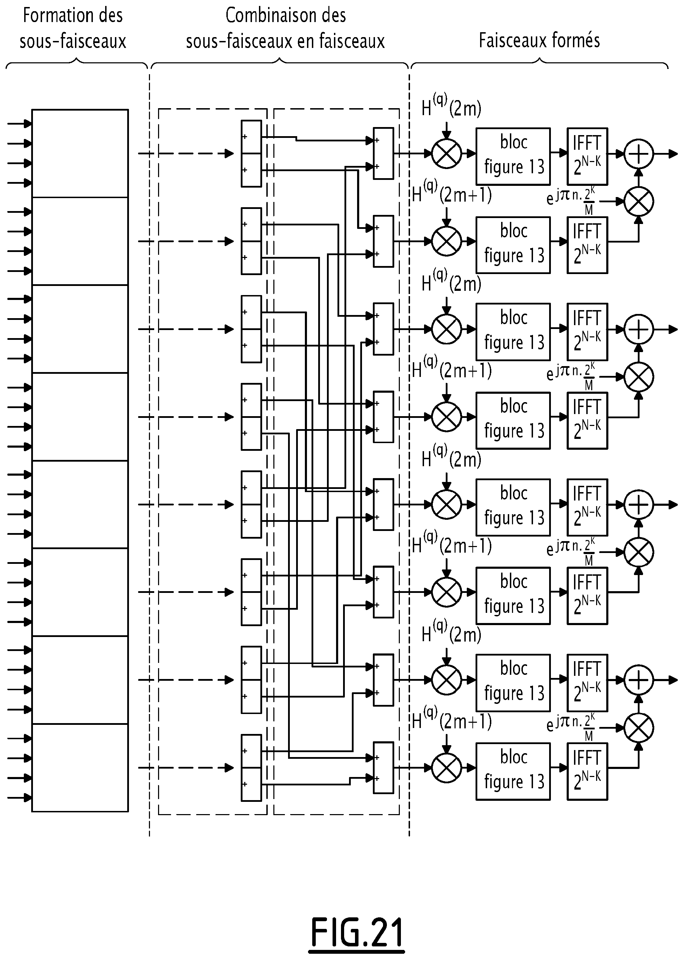

Cela est représenté d'une part sur la figure 19 qui correspond à une représentation synoptique du fonctionnement et d'autre part sur les figures 20 et 21 qui représentent chacune une partie du système de formation de faisceaux qui serait ainsi obtenu (il est ici proposé un exemple avec quatre formateurs de sous-faisceaux et deux étages de combinaison de sous-faisceaux).

### 2.3.4 - Cas général

Les éléments qui viennent d'être décrits peuvent aisément se généraliser ce qui conduit au procédé de formation maintenant explicité.

Dans un cas général illustré par la figure 19, le procédé de formation de Q faisceaux est mis en œuvre par un système de formation de faisceaux comprenant P voies de réception en liaison chacune avec une antenne respective, Q étant un entier non nul et P étant un entier supérieur ou égal à 2. Les Q faisceaux sont mis en œuvre par Q' groupes de faisceaux calculés de façon multiplexée par un même opérateur tel que décrit précédemment. Le procédé comporte, pour chaque voie de réception, les étapes de :

- constitution de deux voies de calcul par somme et différence du signal issu de la voie de réception et de ce même signal retardé de M périodes, et
- sur la deuxième voie de calcul (voie différence), réalisation d'un décalage fréquentiel de n$\pi$/2M par application multiplicative d'un signal e(-jn$\pi$/M) (ou e$^{(-jn\pi/M)}$ selon la notation utilisée, les deux désignant la même opération), n étant la variable courante allant de 0 à M-1,

- application des FFT à M points sur chaque voie de calcul permet de passer dans le domaine fréquentiel, et
- une application d'une fonction de correction spectrale multiplicative destinée à égaliser les voies de réception,
- par duplication sont créées les Q' voies destinées à former les Q' groupes de faisceaux multiplexés numérotés également q' entre 1 et Q'.
- mise en œuvre des opérations comprenant un échantillonnage éventuellement apériodique puis un ré-échantillonnage, selon la technique de la figure 15, pour opérer une décimation effective par $2^{K_{q'}}$ de ces Q' séries de points maintenues pendant $2^{K_{q'}}$ périodes, ce qui permet d'opérer ultérieurement le multiplexage de $2^{K_{q'}}$ faisceaux. Un tel multiplexage permet de faire passer plusieurs faisceaux formés dans un temps donné et donc d'augmenter la capacité.

L'ensemble de ces opérations sont destinées à obtenir Q=somme des $2^{K_{q''}}$ sur q' allant de 1 à Q' contributions de la voie de réception à la formation des Q faisceaux.

Une autre manière de présenter ce procédé serait de recourir à des opérations comme cela a été proposé dans le cadre de la section 2.2.1 (cas des figures 9 et 10), cette description équivalente n'étant pas reprise dans ce qui suit pour ne pas alourdir la présente description.

Sur chacune de ces Q contributions partiellement multiplexées en Q' voies de traitement comportant elles-mêmes chacune deux voies de calcul (fréquences paires et impaires du spectre) application de :

- un retard par phase spectrale linéaire et
- une pondération d'amplitude.

Puis, sommation des voies de traitement issues de chacune des voies de réception pour former Q faisceaux multiplexés partiellement en Q' voies de traitement. Cette opération de sommation peut se réaliser conformément au paragraphe 2.3.3 par la constitution de sous-faisceaux intermédiaires.

Sur chacune des deux voies de calcul de chacune des Q' voies de traitements référencées par l'indice q' :

- application d'une fonction multiplicative de limitation de la bande.
- application d'une iFFT à $M/2^{K_{q'}}$ points multiplexés par $2^{K_{q'}}$.
- sur les deuxièmes voies de calcul (fréquences impaires), transposition du spectre par un décalage fréquentiel de $n\pi/2M$ par application multiplicative d'un signal $e[+j\ \text{floor}(n/2^{K_{q'}})\pi/(M/2^{K_{q'}})]$, n étant la variable courante allant de 0 à M-1 et la fonction floor désignant la fonction partie entière,

Sur chacune des voies de traitements référencées, sommation des deux voies de calcul pour former au bout du compte les Q faisceaux partiellement multiplexés en Q' groupes de faisceaux référencés par l'indice q' et multiplexés par $2^{K_{q'}}$.

## 3 - DESCRIPTION D'UN PROCEDE DE CALIBRAGE

Comme indiqué, dans toute formation de faisceaux, la qualité de la réalisation se dégrade dès lors que les voies de réception ne présentent pas exactement la même réponse. Il est également connu que les différences de réponse, tant en amplitude spectrale qu'en phase spectrale, sont corrigés préalablement à toute formation de faisceau, ce que permet de faire le système de formation via l'étage d'égalisation avec les coefficients $c_p$. Ces données de correction portent sur l'amplitude et la phase spectrale du gain complexe de chacune des voies et elles sont en général acquises par le biais d'un calibrage.

Sur le plan du principe, la formation de faisceaux ne requiert pas que les voies soient égalisées, c'est-à-dire que leurs réponses soient ramenées à une même réponse plate, mais simplement qu'elles soient recalées les unes par rapport aux autres, c'est-à-dire que les différentiels de gains complexes entre voies soient compensés de sorte que toutes les voies de réception soient ramenées sur une même réponse moyenne.

Par contre l'égalisation des voies, qui n'est donc pas une exigence associée à la formation de voies, peut être justifiée par ailleurs, par exemple pour s'assurer que le traitement adapté (compression d'impulsion) soit réalisé avec la fonction de filtrage désirée.

Qu'il soit en vue d'une égalisation ou d'un simple recalage, le principe du calibrage consiste à injecter un même signal de test dans les différentes voies et à comparer le signal reçu à une référence.

Suivant qu'on vise une égalisation ou un simple recalage, la philosophie du calibrage quant à cette référence peut varier :

- pour une égalisation, qui consiste à calibrer chaque voie de façon indépendante, la comparaison à la référence doit servir à extraire la réponse de chaque voie ; pour cela la référence que constitue le signal de test doit être connue, mais, comme les calibrages des différentes voies sont indépendants, il n'est pas requis que le même signal soit utilisé pour toutes les voies, et
- pour un recalage, seule la connaissance du différentiel de réponse entre les voies est recherchée, si bien que la connaissance du signal de calibrage n'est pas requise, dès lors que chaque voie est comparée aux autres voies ; il suffit pour cela d'injecter, sans avoir besoin de le connaître, un même signal dans deux voies pour accéder au différentiel entre ces voies.

Quel que soit l'objectif recherché, égalisation ou recalage, le calibrage implique donc de comparer deux signaux. Traditionnellement, les signaux utilisés pour le calibrage sont des signaux sinusoïdaux et leur utilisation permet d'obtenir une information de gain amplitude-phase à recaler pour chacune des fréquences utilisées.

Mais il est également possible d'utiliser du bruit dès lors qu'on peut disposer d'une analyse spectrale dans chaque voie de réception ; cela permet la mesure du différentiel de fonction de transfert entre deux voies de réception.

Par exemple, il peut être envisagé un procédé de détermination du coefficient différentiel en phase de deux voies de réception comportant chacune un convertisseur analogique-numérique, chaque convertisseur analogique-numérique étant cadencé à une même fréquence d'échantillonnage ; selon les règles du métier, les voies de réception comportent avant échantillonnage des étapes de filtrage destinées à limiter la bande des signaux reçus à une seule bande de Nyquist de la fonction d'échantillonnage. Le procédé comporte au moins une étape de:

- injection d'un signal en entrée de chacune des voies de réception, le signal étant un signal de bruit optionnellement blanc, pour obtenir des signaux de sortie,
- obtention du signal en sortie de chaque convertisseur analogique-numérique,
- analyse spectrale, par trames, de chaque signal de sortie, cette analyse spectrale permettant de disposer d'une pluralité de canaux fréquentiels, chaque canal étant repéré par un entier,
- estimation, par intégration sur plusieurs trames successives, de la corrélation en puissance entre au moins deux canaux de même indice provenant du spectre des signaux issus de chacun des convertisseurs analogiques-numérique, le différentiel en phase entre deux voies de réception étant porté par la phase de cette corrélation, et
- sur chacune des voies de réception, estimation, par intégration sur plusieurs trames successives des spectres obtenus, de la DSP du signal, le différentiel en amplitude entre les deux voies de réception correspondant au ratio des DSP ainsi estimées.

Le signal à injecteur pourra être obtenu en mettant en œuvre les étapes suivantes :

- la génération d'un signal de calibrage numérique,
- la conversion en analogique du signal de calibrage,
- la transposition en fréquence du signal de calibrage converti,
- l'amplification du signal de calibrage transposé, et
- la distribution équilibrée aux différentes voies de réception.

Ainsi, un tel procédé correspond au fait d'utiliser un bruit, pas nécessairement blanc, mais pouvant être considéré comme le résultat du filtrage d'un bruit blanc, permet de remonter aux différentiels d'amplitude et de phase via l'inter-corrélation entre canaux de même rang et via la DSP en sortie de chaque voie (qui s'obtient comme la variance de la sortie des différents canaux).

On peut également remplacer la sortie de l'analyse spectrale d'une des deux voies par l'analyse spectrale d'un signal numérique de référence constituant le signal de test après la conversion numérique-analogique ; moyennant étalonnage préalable de la partie émission, cela permet d'opérer le calibrage absolu d'une voie en vue de son égalisation.

Quoiqu'il en soit, c'est-à-dire que le calibrage soit destiné à une égalisation ou à un recalage, que le type de signal utilisé soit cohérent (sinusoïdal) ou non (bruit), le calcul des coefficients de correction requiert des données brutes obtenues par corrélation et/ou analyse spectrale partielle (une démodulation assortie d'un filtrage passe-bas destinée à calibrer un point de fréquence unique s'apparente à une analyse spectrale monocanal).

Par ailleurs, en particulier parce que la formation de faisceaux n'a été, dans le passé, pratiquée que dans un cadre applicatif à bande étroite qui ramène les commandes à de simples jeux de gains complexes (phase et amplitude) indépendants de la fréquence, le calibrage a, jusqu'à présent, été mené dans le domaine spectral avec des signaux de test sinusoïdaux (un point de calibrage par fréquence de travail).

Cependant, le besoin de former des faisceaux en large bande impose que le calibrage devienne également large bande, ce qui impose que le signal de calibrage soit lui-même composé de plusieurs fréquences couvrant le domaine de travail, que ce soit séquentiellement ou instantanément.

Deux philosophies existent donc quant à la nature du calibrage.

Selon une première philosophie, l'esprit des techniques anciennes est conservé en restant dans le domaine spectral et en remplaçant le signal sinusoïdal de test par une succession de trames sinusoïdales (cette technique est parfois également dénommée selon l'appellation anglaise correspondante de « step frequency »).

Cela implique en particulier de mettre en place un séquencement du processus de calibrage faisant intervenir à la fois un générateur agile pour la synthèse du signal de test et l'ensemble des voies de réception pour la mesure.

Il convient également que le séquenceur prenne en compte la mémorisation et la transmission à un calculateur des données acquises lors du processus de mesure. La synchronisation de ce processus tient aussi compte des temps de stabilisation de chaque palier de fréquence ainsi que du bon calage temporel de ces mesures d'une voie de réception à l'autre. Ce dernier point n'est pas une difficulté si l'ensemble des voies de réception est localisé sur un seul et même circuit, mais en devient une dès lors que ces voies se répartissent sur plusieurs circuits.

A contrario de cette première philosophie se situe l'utilisation de bruit large bande dans le sens où ce type de signaux contient de façon instantanée l'ensemble des composantes spectrales utiles au calibrage.

Dans ce cas, deux approches sont possibles, soit temporelle, soit fréquentielle.

L'approche temporelle consiste à calculer la covariance entre un signal de référence et un ensemble de répliques du signal reçu décalées d'un coup d'horloge les unes des autres ; ce faisant cette approche fournit une réponse temporelle qu'il faudrait dé-convoler par l'autocorrélation du signal de référence, ce qui n'est envisageable dans la pratique que si ce signal est un bruit blanc. Cette approche ne permet donc pas, en particulier, de prendre une voie comme référence pour une autre voie dans le but de mesurer une grandeur différentielle.

Ainsi l'approche fréquentielle est-elle nettement à privilégier ; cette approche est décrite précédemment avec le procédé de détermination précité.

Cette approche décrit la possibilité d'effectuer une mesure différentielle entre deux voies de réception dès lors que ces voies sont dotées d'une analyse spectrale. La technique consiste, par intégration de trame à trame, à calculer la densité spectrale de puissance $p_n(k)$ sur chaque voie et la corrélation en puissance $c_{n,m}(k)$ entre canaux de même rang k de chacune des voies ; le différentiel amplitude/phase entre voies s'obtient alors comme la normalisation de la corrélation par l'une des DSP :

$$c_{n,m}(k) \ / \ p_n(k) \ \text{ou} \ c_{m,n}(k) \ / \ p_m(k) = c_{n,m}(k)^* \ / \ p_m(k)$$

L'intérêt de cette méthode est qu'elle ne requiert pas de séquencement particulier puisque toutes les fréquences du spectre sont traitées simultanément.

Un autre intérêt réside dans le fait que le bruit n'a pas besoin d'être blanc car il suffit qu'il puisse être considéré comme le résultat du filtrage d'un bruit blanc et que toutes les composantes spectrales utiles y soient présentes ; ainsi un simple générateur de bruit large bande (diode de bruit, chaîne d'amplificateurs à fort gain) suffit sachant que les chaînes analogiques de réception se chargent, par principe, de limiter sa bande à la bande utile avec une sélectivité cohérente avec le besoin en dynamique instantanée.

On comprendra aisément que le système de formation 10 est adapté à cette deuxième philosophie, puisqu'elle implique une analyse spectrale sur chaque voie de réception et que la résolution requise pour le calibrage est, par principe, celle de cette analyse spectrale.

Qui plus est, la présence du premier multiplieur servant au recalage de la voie peut être mise à profit, via un multiplexeur, pour réaliser le produit inhérent au calcul de corrélation. La seule ressource supplémentaire requise pour assurer le calibrage est alors un intégrateur multiplexé sur M points (M étant la longueur des FFT).

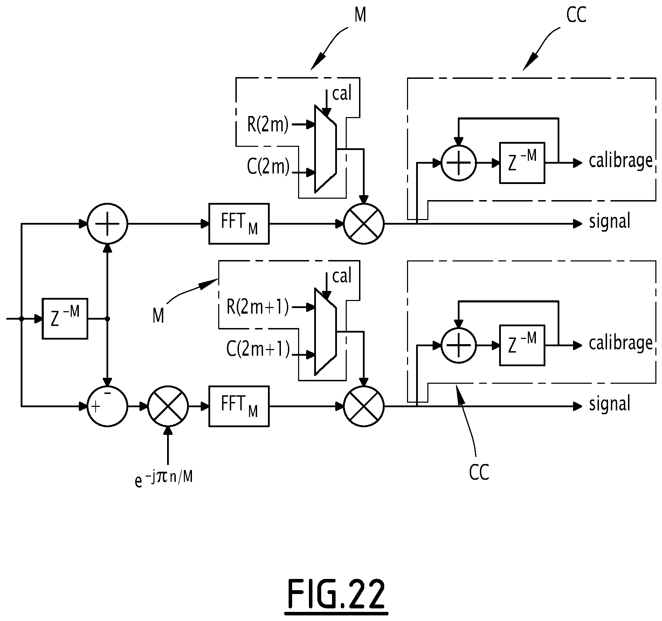

La figure 22 montre un dispositif de calibrage du système de formation 10, le dispositif de calibrage apportant quelques modifications aux voies de réception pour assurer le calibrage :

- un multiplexeur M pour chaque voie prenant en entrée la fonction d'égalisation des voies (coefficients C(2m) ou C(2m+1) en omettant la référence de la voie) et un signal de référence noté R, et
- un circuit de calibrage CC comprenant un intégrateur de trames à trames.

Ces ressources sont dupliquées sur la voie des fréquences paires et sur celle des fréquences impaires.

Le processus de calibrage décrit précédemment permet de réaliser un calibrage différentiel entre plusieurs voies de réception par corrélation entre les sorties de FFT. Ce processus se réalise de façon autonome dès lors que toutes des voies de réception sont localisées sur le même circuit.

Si tel n'est pas le cas, comme cela a été évoqué, il convient alors de faire « passer » au moins une voie de réception d'un circuit à l'autre, ce qui pose à la fois un problème de synchronisation et augmente le besoin en canaux de communication entre circuits.

Une solution pour pallier ce problème consiste à préférer un calibrage absolu, relatif à une référence numérique commune à toutes les voies de réception.

Pour cela, on disposera de deux éléments :

- un générateur de bruit servant à la synthèse du bruit de calibrage ; le signal issu de ce générateur, ou une décimation de ce signal (il est souhaitable que le bruit soit généré à cadence plus élevée pour ne pas être dégradé par sa chaîne d'émission), constitue le signal de référence, et
- une duplication de ce générateur de référence sur chacun des circuits permettant de former des sous-faisceaux à partir d'un sous-groupe de voies de réception ; l'utilisation des répliques ainsi formées dispense de diffuser le signal de référence à tous les circuits, ce qui simplifie les interconnexions et rend, par là même, chaque circuit complètement autonome. Afin de faciliter la synchronisation entre circuits différents, on s'attachera à ce que la génération du bruit de calibrage effectuée par ce générateur soit synchrone des trames FFT.

Un deuxième aspect du procédé de calibrage consiste, pendant la phase de calibrage, à substituer un signal de synchronisation au signal issu des FFT. L'utilisation du chemin de données pour véhiculer ce signal destiné à rétablir la synchronisation permet de diriger ce signal de façon naturelle vers les blocs de regroupement. Si le regroupement s'effectue via plusieurs sous-blocs, il y aura lieu de régénérer un tel signal de synchronisation dans chaque sous-bloc à destination du sous-bloc suivant, et, pour le dernier, à destination du bloc final assurant filtrage et retour en temps.

Le procédé de calibrage tel que décrit ne requiert donc aucune ressource spécifique en termes de transmission de signaux en temps réel : ni distribution de la référence commune, ni échange de signaux entre les différents circuits de formation de sous-faisceaux.

Un aspect très particulier des processus de calibrage sur bruit via analyse spectrale réside dans le fait que le décalage temporel entre la voie mesurée et le signal de référence tend à biaiser la mesure ; cela est dû au fait que la cohérence entre les deux signaux disparaît en bord de trame.

Ainsi, l'effet principal de cette dé-corrélation partielle est un biais multiplicatif en amplitude égal à $1 - |\tau| / T$ où $\tau$ est le décalage temporel entre les deux signaux et T la durée de l'analyse spectrale, ici $2N_{FFT}/f_{ECH}$.

D'autres effets, d'ordre plus faible, peuvent aussi apparaître à cause du décentrage, tels que des ondulations localisées principalement en bord de bande. Même si ce biais est similaire pour toutes les voies de réception dès que le calibrage est opéré à l'aide d'un signal de référence (et non entre voies) et n'impacte donc pas de ce fait le différentiel entre voies, il est tout de même souhaitable, pour réduire cet effet, que le calibrage soit opéré en deux temps :

- une première étape, de faible durée, destinée à « dégrossir » le résultat en terme de retard : un ordre de grandeur de ce retard est déterminé à partir de la pente de phase moyenne, puis arrondi au multiple de $1/f_{ECH}$ le plus proche. A partir de cette mesure initiale, il est possible de recaler numériquement les signaux via un dispositif de recalage placé en amont du traitement, et
- une deuxième étape, plus longue et plus précise, pas ou très peu biaisée du fait qu'elle traite des signaux recalés temporellement.

Cela implique, bien entendu, qu'un dispositif de recalage temporel soit introduit en tête de traitement, avant passage dans le domaine spectral. Un tel dispositif, dont le schéma est présenté par la figure 21, comporte une ligne à retard réglable, directement commandée par le résultat de la première phase de calibrage (retard arrondi en nombre de périodes d'échantillonnage).

Ce dispositif est directement piloté par le retard à appliquer qui peut être indifféremment positif ou négatif entre $-2^{Q-1}$ et $-1 + 2^{Q-1}$.

Lorsque le retard à appliquer est nul, c'est-à-dire en position initiale, le retard absolu appliqué par le dispositif est $2^{Q-1}$ ; les retards sont appliqués en relatif par rapport à ce retard absolu de référence. L'inversion du bit de poids fort permet de centrer ce retard dans l'excursion du multiplexeur.

On pourra noter que le calcul du différentiel d'amplitude entre la voie mesurée et le signal de référence peut également s'opérer par le calcul de la racine carrée du rapport de leurs densités de puissances respectives. Cela présente l'avantage de ne pas être biaisé en amplitude mais présente, a contrario, l'inconvénient de requérir une ressource de calcul supplémentaire dédiée pour estimer la DSP du signal de la voie mesurée.

En reformulant ce qui vient d'être décrit de manière similaire à ce qui a pu être fait précédemment pour le procédé de formation, la présente section porte sur un procédé de calibrage du système de formation comportant :

1) l'exploitation de la première partie de l'architecture précédemment décrite (voir sections précédentes) pour opérer :

- une analyse spectrale à 2M points répartie sur deux voies de calcul portant respectivement les fréquences paires et les fréquences impaires de cette analyse, et
- une fonction multiplicative dans le domaine spectral,

2) une réplication du générateur de signal de calibrage sur chacun des circuits permettant de former des sous-faisceaux à partir d'un sous-groupe de voies de réception, cette génération étant synchronisée avec l'analyse spectrale du point 1,

3) l'analyse spectrale de ce signal de calibrage par un dispositif identique à celui du point 1.

4) sur chacune des voies de réception, le calcul de la corrélation en puissance entre le spectre d'une voie de réception et celui du signal de calibrage et la DSP du signal de calibrage, et

5) le calcul de la correction à apporter sur la voie comme ratio entre la DSP du signal de calibrage et la corrélation en puissance, ou, solution alternative l'exploitation de la seule phase de ce ratio et du rapport des DSP du signal de référence et du signal de la voie mesurée.

Comme la réplication de chaque signal de calibrage est synchronisée avec l'analyse spectrale du point 1 pour chaque voie de réception, par construction, le procédé de calibration permet d'assurer que les voies de réception soient recalées entre elles.

## 4 - TRANSPOSITION DES PROCEDES DE FORMATION A L'EMISSION

La formation de faisceaux à l'émission, qui pourrait plus justement être dénommée formation de voies d'émission en contexte multifaisceaux, relève globalement des mêmes principes que ceux qui ont été exposés pour la réception.

On dispose d'un certain nombre de groupes de $2^K$ signaux échantillonnés à $f_{ECH}/2^K$ et multiplexés, le rang $2^K$ d'échantillonnage/multiplexage étant spécifique à chaque groupe et chaque signal étant destiné à un faisceau d'émission réalisé par un ensemble d'antennes. Ces différents signaux sont complexes et sont inclus, par principe, dans la bande sous-échantillonnée (c'est-à-dire [0 - $f_{ECH}/2^K$]) ; leur émission requiert donc qu'ils soient interpolés pour être ramenés à $f_{ECH}$ sur chaque voie d'émission.

Par contre, du fait du sous-échantillonnage potentiel par $2^K$, une ambiguïté d'un multiple de $f_{ECH}/2^K$, qui est une ambiguïté de principe, subsiste quant à la position réelle de ces signaux dans la bande d'échantillonnage finale [0 - $f_{ECH}$]. Par ailleurs, il n'est pas à exclure de profiter de l'opération de formation de faisceaux pour opérer un décalage fréquentiel spécifique à chaque groupe de faisceaux.

De façon duale à la formation des faisceaux à la réception, la formation des divers faisceaux consiste à appliquer certains filtrages sur les signaux :

- une interpolation adaptée aux différents signaux, puis
- l'application des retards correspondant aux différents couples faisceaux - voies d'émission, accompagnés de la pondération d'antenne et suivis de la transposition des faisceaux, puis
- des regroupements additifs destinés à former les voies d'émission, puis
- l'application des corrections d'égalisation des voies d'émission.

L'ensemble de ces opérations correspond au retournement des opérations effectuées dans la formation de faisceaux à la réception.

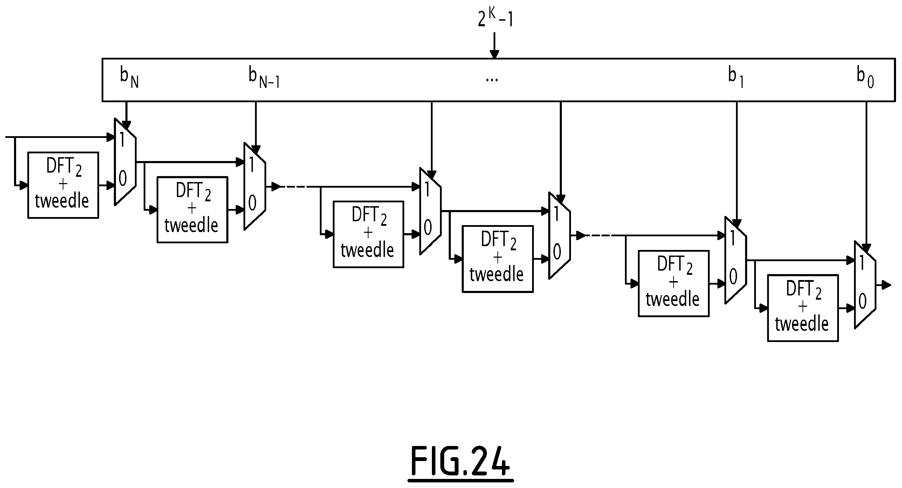

Dans ce cadre, c'est la FFT qui est modifiée pour s'adapter au taux de multiplexage des données d'entrée ; cette modification, qui est le dual de la modification apportée à l'IFFT sur la figure 15, fait l'objet de la figure 24.

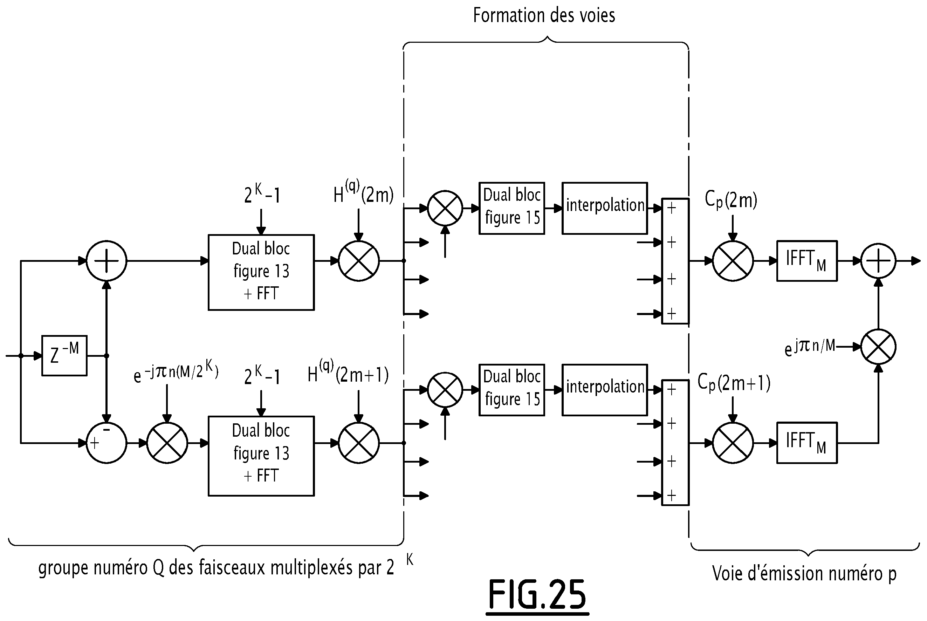

Le système de formation de voies d'émission multifaisceaux proposé est représenté schématiquement sur la figure 25.

Ce système comporte notamment :

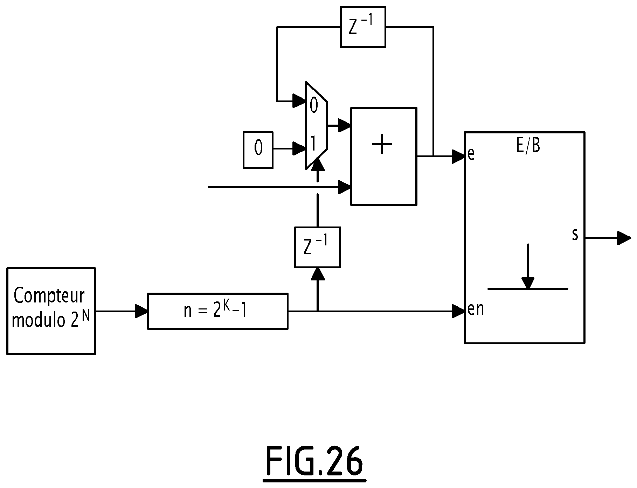

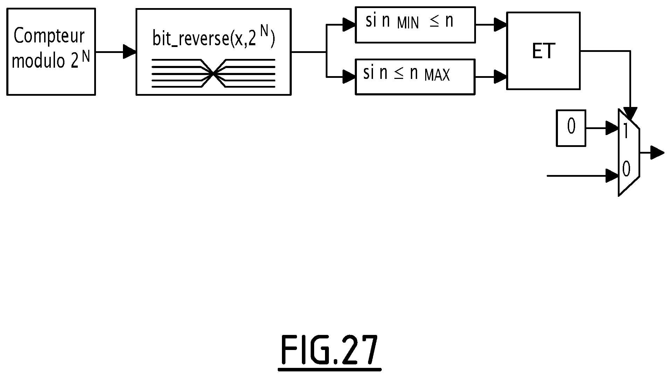

- la formation partielle des voies pour les faisceaux multiplexés correspondant au bloc dit « dual du bloc de la figure 17 » qui est décrit sur la figure 26 : cette opération qui peut s'interpréter comme une transposition consiste à intégrer l'ensemble des faisceaux multiplexés qui ont été préalablement pondérés et retardés. Cette opération s'accompagne d'un échantillonnage et d'une remise à zéro à chaque fin de tranche (une tranche de $2^K$ échantillons correspondant à une fréquence des $2^K$ faisceaux multiplexés) et d'un maintien pendant la durée d'une trame.
- l'interpolation (x$2^K$) à $f_{ECH}$ des voies partielles ainsi formées est décrite quant à elle sur la figure 27 : cette étape consiste à insérer des zéros pour toutes les fréquences extérieures à la bande utile. En reprenant les mêmes notations que dans la partie dédiée à la formation de faisceaux à la réception, si n est l'indice courant, les fréquences utiles correspondent à $n_{MIN} \leq bit\_reverse(n,2^N) \leq n_{MAX}$ avec $n_{MIN} = m + k\, 2^{N-K}$ et $n_{MAX} = m - 1 + (k+1)\, 2^{N-K}$.

Compte-tenu de l'ensemble des éléments décrits jusqu'à présent, toujours en reformulant, un premier mode de réalisation d'un procédé correspondant est un procédé de formation de P voies d'émission multifaisceaux à partir de Q faisceaux partiellement multiplexés sur Q' groupes de faisceaux indexés par q' (compris entre 1 et Q') pour des taux de multiplexage égaux à $2^{K_{q'}}$ avec $Q = \Sigma_{q'}\, 2^{K_{q'}}$

Le procédé comporte, pour chaque groupe de faisceaux, les étapes de :

- génération de deux voies par somme et différence du signal et de ce même signal retardé de M périodes,
- réalisation d'un décalage fréquentiel de $n\pi/(M/2^{K_{q'}})$ par application multiplicative d'un signal $e[-jn\pi/(M/2^{K_{q'}})]$, n étant un entier allant de 0 à $M/2^{K_{q'}}-1$, $M/2^{K_{q'}}$ étant un entier strictement supérieur à 2,- mise en œuvre d'opérations sur chacune des voies de calculs, les opérations comportant :

  - l'application d'une transformée de Fourier discrète à $M/2^{K_{q'}}$ points multiplexés par $2^{K_{q'}}$ pour obtenir $M/2^{K_{q'}}$ points dans le spectre, chaque point du spectre correspondant à des indices pairs d'une analyse spectrale à $2* M/2^{K_{q'}}$ points du signal issu du signal formé et étant repérés de manière bijective par un indice qui est un nombre pair compris entre 0 et $2* M/2^{K_{q'}}-1$,

- l'application d'une fonction de limitation de bande sur les points dans le spectre pour obtenir des points limités,
- la formation par duplication d'autant de répliques que de voies d'émission à former (si ce nombre est important, cette réplication peut s'étendre sur plusieurs cartes de calcul différentes),

pour chacune des répliques formées sur chacune des voies de calcul et pour chaque faisceau multiplexé :

- l'application du retard pour contribuer à former la voie d'émission associée à la réplique,
- l'application d'une pondération en amplitude,
- la formation partielle de la voie d'émission par intégration des $2^{K_{q'}}$ points multiplexés et maintien sur $2^{K_{q'}}$ périodes (figure 26),
- l'application du processus d'interpolation pouvant s'accompagner d'une translation en fréquence par ré-échantillonnage et insertion de 0 (figure 27), et

A ce stade, on dispose dans le domaine spectral, pour chaque voie à former, de Q' voies partiellement formées.

Le procédé comprend ensuite la sommation des signaux issus de ces Q' voies partielles pour former une voie d'émission disponible sur une première voie de calcul pour les fréquences paires du spectre et sur une deuxième voie de calcul pour les fréquences impaires du spectre.

Pour chacune des voies de calcul de chaque voie formée :

- application de la correction fréquentielle d'égalisation des voies d'émission,
- application d'une IFFT à M points,
- sur la deuxième voie de calcul, réalisation d'une transposition linéaire du spectre,

Le procédé comporte alors une dernière opération de regroupement additif des deux voies de calcul pour disposer du signal temporel de la voie formée.

*Conclusion*

Les procédés décrits permettent à réaliser par le biais d'un même dispositif l'ensemble des opérations associées à une formation de faisceaux à la réception et à une formation de voies multifaisceaux à l'émission. Pour cela, ils utilisent des architectures de filtres FIR spécifiques qui sont pilotées dans le spectre.

Grâce au passage dans le domaine fréquentiel, ces architectures ramènent la réalisation d'un retard quelconque à une simple multiplication par une exponentielle complexe à phase linéaire ; elles permettent d'assurer conjointement :

- le filtrage associé à la fonction retard,
- à la réception, le filtrage de Hilbert destiné à la démodulation I/Q si le signal d'entrée est réel et/ou le filtrage de la bande utile associée au faisceau formé, à l'émission, le filtrage d'interpolation dans le cas de faisceaux à bande étroite, et
- le filtrage associé à l'égalisation des voies de réception ou des voies d'émission.

Dans cette architecture, on opère un passage dans le spectre et l'ensemble des opérations de filtrage citées s'effectue dans ce domaine ; ce passage dans le spectre s'effectue :

- à la réception, au niveau de chaque voie de réception, le retour en temps s'effectuant au niveau de chaque faisceau formé,
- à l'émission, au niveau de chaque faisceau, le retour en temps s'effectuant au niveau de chaque voie formée.

Lorsque la bande utile est plus petite que la bande d'échantillonnage, il est possible, grâce à la nature propre des architectures des FFT et IFFT qui consiste en une décomposition en étages successifs de radix-2, de multiplexer plusieurs faisceaux occupant la même bande utile ; cela s'opère naturellement via une adaptation simple de cette architecture.

A la réception, la sortie d'un tel formateur de faisceaux permet donc de disposer indifféremment d'un faisceau de bande $f_{ECH}/2$ ou $f_{ECH}$ suivant que le signal d'entrée est réel ou complexe (c'est-à-dire issu d'un processus de démodulation I/Q avec décimation par 2) ou de $2^K$ faisceaux multiplexés de bande $f_{ECH}/2^K$.

En multipliant les opérations de formation et les voies de sorties, il est également possible de disposer simultanément sur des sorties différentes d'un ensemble de faisceaux tels que décrits mais présentant des bandes différentes sur chaque sortie n avec la relation $B_n \times N_n = f_{ECH}/2$ ou $f_{ECH}$ suivant le type de signal en entrée, $B_n$ étant la bande

des faisceaux véhiculés par la sortie n et $N_n$ leur nombre.

A l'émission, ce type d'architecture est applicable de façon duale à l'émission à quelques adaptations près associées au fait qu'on multiplexe des faisceaux à la réception et qu'on les dé-multiplexe à l'émission.

Comme cette formation de faisceaux et ou de voies est à bande très large, les présents procédés sont adaptés pour tout système de réception (respectivement d'émission) comportant plusieurs chaînes de réception numériques dont la combinaison permet une écoute améliorée dans une direction (respectivement plusieurs chaînes d'émission dont la combinaison permet une émission simultanée de plusieurs faisceaux dans des directions différentes).

**Revendications**

1. Procédé de formation de Q faisceaux multiplexés sur Q' groupes de faisceaux indexés par q', q' étant un entier variant entre 1 et Q', Q' étant un entier supérieur à 1, et le taux de multiplexage valant $2^{K_{q'}}$, $K_{q'}$ valant un entier respectif pour chaque valeur de q', le procédé étant mis en œuvre par un calculateur d'un système de formation de faisceaux comprenant P voies de réception propres chacune à recevoir des signaux provenant d'une antenne respective, chaque antenne présentant une ouverture respective, Q et P étant deux entiers supérieurs ou égaux à 2, le procédé comprenant :

   - le passage dans le domaine spectral de signaux issus de signaux provenant de chaque antenne,
   - la mise en œuvre d'un ensemble d'opérations dans le domaine spectral, dites opérations de dépointage, l'ensemble d'opérations de dépointage comprenant :

      - pour chaque voie de réception, une opération de génération par duplication d'une contribution à chacun des Q' groupes de faisceaux à générer,
      - pour chaque contribution, une opération de décimation par $2^{K_{q'}}$, et un maintien sur $2^{K_{q'}}$ périodes pour constituer un groupe de $2^{K_{q'}}$ contributions multiplexées par $2^{K_{q'}}$,
      - la mise en œuvre pour chaque groupe de contributions d'une opération d'introduction multiplexée par $2^{q'}$ d'un ensemble de $2^{q'}$ retards, et d'un éventuel ensemble de $2^{K_{q'}}$ opérations de pondération de l'ouverture de l'antenne, et

      - une opération de sommation des contributions à un faisceau à générer, issues de toutes les voies de réception, multiplexées pour chaque voie sur Q' groupes de contributions, l'opération de sommation étant réalisée pour chaque faisceau à générer,
      le procédé **caractérisé en ce qu'**il comporte, pour chaque voie de réception, la formation de deux voies de calcul, le signal d'entrée de la première voie de calcul étant obtenu par la mise en œuvre du décalage du signal reçu par l'antenne de M points, M étant un entier supérieur ou égal à 2, pour obtenir un signal décalé et le calcul de la somme du signal reçu et du signal décalé, et
      le signal d'entrée de la deuxième voie de calcul étant obtenu par la mise en œuvre du décalage du signal reçu de M points pour obtenir un signal décalé et le calcul de la différence entre le signal reçu et le signal décalé.

2. Procédé de formation selon la revendication 1, dans lequel les opérations mises en œuvre dans le domaine spectral comportent, en outre, une opération d'égalisation des voies, l'opération d'égalisation étant mise en œuvre avant les opérations de dépointage.

3. Procédé de formation selon la revendication 1 ou 2, dans lequel les opérations mises en œuvre dans le domaine spectral comportent, en outre, une opération de limitation de bande, l'opération de limitation de bande étant mise en œuvre après les opérations de dépointage.

4. Procédé de formation selon l'une quelconque des revendications 1 à 3, dans lequel le passage dans le domaine spectral est réalisé par application d'une transformée de Fourier discrète à M points sur chacune des voies de calcul.

5. Procédé de formation selon l'une quelconque des revendications 1 à 4, dans lequel le procédé comporte une étape de retour dans le domaine temporel, l'étape de retour dans le domaine temporel comportant l'application de $2^{K_{q'}}$ transformées de Fourier discrètes inverses à $M/2^{K_{q'}}$ points multiplexées par $2^{K_{q'}}$ sur chacune des voies de calcul, le procédé comportant :

   - une opération de décalage spectral de la deuxième voie de calcul par application multiplicative d'un signal e[+j floor(n/$2^{K_{q'}}$)-$\pi$/( M/$2^{q'}$)], n étant un entier allant de 0 à M-1, la fonction floor désignant la fonction partie entière, e désignant la fonction exponentielle et j désignant le nombre complexe tel que j²=-1, et
- une opération de sommation des deux sorties des deux voies de calcul.

6. Calculateur, notamment circuit logique programmable, adapté pour mettre en œuvre les opérations d'un procédé de formation selon l'une quelconque des revendications 1 à 5.

7. Système de formation de Q faisceaux multiplexés sur Q' groupes de faisceaux indexés par q', q' étant un entier variant entre 1 et Q', Q' étant un entier supérieur à 2, Q' étant un entier supérieur à 1, et le taux de multiplexage valant $2^{K_{q'}}$, $K_{q'}$ valant un entier respectif pour chaque valeur de q', le système de formation comprenant P voies de réception propres chacune à recevoir des signaux provenant d'une antenne respective, Q et P étant deux entiers supérieurs ou égaux à 2, et le système de formation comprenant un calculateur selon la revendication 6.

8. Produit programme d'ordinateur comprenant des instructions qui, lorsque le programme est exécuté par un ordinateur, conduisent celui-ci à mettre en œuvre les opérations d'un procédé selon l'une quelconque des revendications 1 à 5.

9. Support lisible par ordinateur comprenant des instructions qui, lorsqu'elles sont exécutées par un ordinateur, conduisent celui-ci à mettre en œuvre les opérations d'un procédé selon l'une quelconque des revendications 1 à 5.

**Patentansprüche**

1. Bildungsverfahren von Q Strahlen, die auf Q' Strahlgruppen gemultiplext sind, die durch q' indiziert sind, wobei q' eine ganze Zahl ist, die zwischen 1 und Q' variiert, Q' eine ganze Zahl größer als 1 ist, und die Multiplexrate $2^{K_{q'}}$ ist, $K_{q'}$ für jeden Wert von q' eine entsprechende ganze Zahl ist, wobei das Verfahren von einem Rechner eines Strahlbildungssystems implementiert wird, umfassend P Empfangskanäle, die jeweils geeignet sind, um Signale von einer jeweiligen Antenne zu empfangen, jede Antenne eine jeweilige Öffnung aufweist, Q und P zwei ganze Zahlen größer als oder gleich wie 2 sind, das Verfahren umfassend:

   - Durchleiten in den Spektralbereich von Signalen, die von jeder Antenne stammen,
   - Implementieren eines Satzes von Vorgängen in dem Spektralbereich, die als Ausrichtungsaufhebungsvorgänge bezeichnet werden, die Ausrichtungsaufhebungsvorgänge umfassend:

      - für jeden Empfangskanal einen Erzeugungsvorgang durch Duplizieren eines Beitrags zu jeder der Q' Gruppen von zu erzeugenden Strahlen,
      - für jeden Beitrag einen Dezimierungsvorgang durch $2^{K_{q'}}$, und eine Aufrechterhaltung über $2^{K_{q'}}$ Zeiträume, um eine Gruppe von $2^{q'}$ Beiträgen zu bilden, die durch $2^{K_{q'}}$ gemultiplext werden,
      - Implementieren für jede Beitragsgruppe eines gemultiplexten Einführungsvorgangs durch $2^{K_{q'}}$ eines Satzes von $2^{K_{q'}}$ Verzögerungen und eines optionalen Satzes von $2^{K_{q'}}$ Gewichtungsvorgängen der Antennenöffnung und

      - einen Summationsvorgang der Beiträge für einen zu erzeugenden Strahl, die von allen Empfangskanälen stammen und für jeden Kanal auf Q' Gruppen von Beiträgen gemultiplext sind, wobei die Summation für jeden zu erzeugenden Strahl durchgeführt wird,

   wobei das Verfahren **dadurch gekennzeichnet ist, dass** es Folgendes umfasst:

      für jeden Empfangskanal die Bildung von zwei Rechenkanälen, wobei das Eingangssignal des ersten Rechenkanals durch die Implementierung der Verschiebung des von der Antenne empfangenen Signals um M Punkte erlangt wird, wobei M eine ganze Zahl größer als oder gleich wie 2 ist, um ein verschobenes Signal und die Berechnung der Summe des empfangenen Signals und des verschobenen Signals zu erlangen, und
      das Eingangssignal des zweiten Berechnungskanals durch Durchführen einer Verschiebung des empfangenen Signals um M Punkte erlangt wird, um ein verschobenes Signal die Berechnung der Differenz zwischen dem empfangenen Signal und dem verschobenen Signal zu erlangen.

2. Bildungsverfahren nach Anspruch 1, wobei die in dem Spektralbereich implementierten Vorgänge zusätzlich einen Kanalentzerrungsvorgang umfassen, wobei der Entzerrungsvorgang vor den Ausrichtungsaufhebungsvorgängen implementiert wird.

3. Bildungsverfahren nach Anspruch 1 oder 2, wobei die in dem Spektralbereich durchgeführten Vorgänge ferner einen Bandbegrenzungsvorgang umfassen, wobei der Bandbegrenzungsvorgang nach den Ausrichtungsaufhebungsvorgängen durchgeführt wird.

4. Bildungsverfahren nach einem der Ansprüche 1 bis 3, wobei durch Durchleiten in den Spektralbereich durch Anwenden einer diskreten Fourier-Transformation mit M Punkten auf jedem Berechnungskanal erfolgt.

5. Bildungsverfahren nach einem der Ansprüche 1 bis 4, wobei das Verfahren einen Rückführungsschritt in den Zeitbereich umfasst, wobei der Rückführungsschritt in den Zeitbereich das Anwenden von $2^{K_{q'}}$ inversen diskreten Fourier-Transformationen mit $M/2^{K_{q'}}$ Punkten umfasst, die durch $2^{K_{q'}}$ auf jedem der Rechenkanäle gemultiplext werden, wobei Verfahren umfassend:

   - einen spektralen Verschiebungsvorgang des zweiten Berechnungswegs durch multiplikative Anwendung eines Signals $e[+j\, floor(n/2^{K_{q'}})\pi/(\, M/2^{K_{q'}})]$, wobei n eine ganze Zahl von 0 bis M-1 ist, die Funktion floor die Ganzzahlfunktion bezeichnet, e die Exponentialfunktion bezeichnet und j die komplexe Zahl bezeichnet, sodass $j^2=-1$, und
   - einen Summationsvorgang der zwei Ausgänge der zwei Berechnungskanäle.

6. Rechner, insbesondere eine programmierbare Logikschaltung, die angepasst ist, um die Vorgänge eines Bildungsverfahrens nach einem der Ansprüche 1 bis 5 zu implementieren.

7. Bildungssystem von Q Strahlen, die auf Q' Strahlgruppen gemultiplext sind, die durch q' indiziert sind, wobei q' eine ganze Zahl ist, die zwischen 1 und Q' variiert, wobei Q' eine ganze Zahl größer als 2 ist, Q' eine ganze Zahl größer als 1 ist, und die Multiplexrate $2^{K_{q'}}$ ist, $K_{q'}$ für jeden Wert von q' eine entsprechende ganze Zahl ist, das Bildungssystem umfassend P Empfangskanäle, die jeweils geeignet sind, um Signale von einer jeweiligen Antenne zu empfangen, Q und P zwei ganze Zahlen größer als oder gleich wie 2 sind, und das Bildungssystem umfassend einen Rechner nach Anspruch 6.

8. Computerprogrammprodukt, umfassend Anweisungen, die, die, wenn das Programm von einem Rechner ausgeführt wird, diesen dazu veranlassen, die Vorgänge eines Verfahrens nach einem der Ansprüche 1 bis 5 zu implementieren.

9. Computerlesbarer Träger, umfassend Anweisungen, die, wenn sie von einem Rechner ausgeführt werden, diesen dazu veranlassen, die Vorgänge eines Verfahrens nach einem der Ansprüche 1 bis 5 zu implementieren.

## Claims

1. Method for forming Q beams multiplexed on Q' groups of beams indexed by q', q' being an integer varying between 1 and Q', Q' being an integer greater than 1, and the multiplexing rate being $2^{k_{q'}}$, $K_{q'}$ being a respective integer for each value of q', the method being implemented by a computer of a beamforming system comprising P reception paths, each capable of receiving signals from a respective antenna, each antenna having a respective aperture, Q and P being two integers greater than or equal to 2, the method comprising:

   - the converting to the spectral domain of signals originating from signals coming from each antenna,
   - the implementation of a set of operations in the spectral domain, known as de-pointing operations, the set of de-pointing operations comprising:

      - for each reception path, an operation for generation by duplication of a contribution to each of the Q' groups of beams to be generated,
      - for each contribution, an operation for decimation by $2^{k_{q'}}$, and holding over $2^{q'}$ periods to constitute a group of $2^{k_{q'}}$ contributions multiplexed by $2^{k_{q'}}$,
      - the implementation for each group of contributions of an operation multiplexed by $2^{k_{q'}}$ for the introduction of a set of $2^{k_{q'}}$ delays, and of a possible set of $2^{k_{q'}}$ antenna aperture weighting operations, and

      - an operation for the summation of the contributions to a beam to be generated, originating from all the reception paths, multiplexed for each path on Q' groups of contributions, the summation operation being carried out for each beam to be generated,
      the method being **characterised in that** it comprises, for each reception path, the formation of two calculation paths, the input signal of the first calculation path being obtained by offsetting the signal received by the antenna by M points, M being an integer greater than or equal to 2, to obtain an offset signal, and the calculation of the sum of the received signal and the offset signal, and

the input signal of the second calculation path being obtained by offsetting the received signal by M points to obtain an offset signal, and the calculation of the difference between the received signal and the offset signal.

2. Forming method according to claim 1, wherein the operations implemented in the spectral domain additionally comprise a path equalisation operation, the equalisation operation being implemented before the de-pointing operations.

3. Forming method according to claim 1 or 2, wherein the operations implemented in the spectral domain additionally comprise a band limiting operation, the band limiting operation being implemented after the de-pointing operations.

4. Forming method according to any one of claims 1 to 3, wherein the converting to the spectral domain is carried out by application of a discrete Fourier transform at M points on each of the calculation paths.

5. Forming method according to any one of claims 1 to 4, wherein the method comprises a step of returning to the time domain, the step of returning to the time domain comprising the application of $2^{k_{q'}}$ inverse discrete Fourier transforms at $M/2^{k_{q'}}$ points multiplexed by $2^{k_{q'}}$ on each of the calculation paths, the method comprising:

   - an operation for spectral offset of the second calculation path by multiplicative application of a signal e[+j floor($n/2^{k_{q'}}$)$\pi$/( $M/2^{k_{q'}}$)], n being an integer ranging from 0 to M-1, the floor function designating the integer part function, e designating the exponential function, and j designating the complex number such that $j^2 = -1$, and
   - an operation for the summation of the two outputs of the two calculation paths.

6. Computer, in particular a programmable logic circuit, capable of implementing the operations of a forming method according to any one of claims 1 to 5.

7. System for forming Q beams multiplexed on Q' groups of beams indexed by q', q' being an integer ranging from 1 to Q', Q' being an integer greater than 2, Q' being an integer greater than 1, and the multiplexing rate being $2^{k_{q'}}$, $K_{q'}$ being a respective integer for each value of q', the forming system comprising P reception paths, each capable of receiving signals from a respective antenna, Q and P being two integers greater than or equal to 2, and the forming system comprising a computer according to claim 6.

8. Computer program product comprising instructions which, when the program is executed by a computer, cause the computer to implement the operations of a method according to any one of claims 1 to 5.

9. Computer-readable medium comprising instructions which, when executed by a computer, cause the computer to implement the operations of a method according to any one of claims 1 to 5.

## FIG.1

FIG.2

$$\text{FIG.3}$$

$$\text{FIG.4}$$

**FIG.5**

## FIG.6

## FIG.7

## FIG.8

FIG.9

FIG.10

FIG.11

E

$\alpha_3^{(1)} e^{-j\Theta_1^{(1)}(2m)}$

$\alpha_3^{(2)} e^{-j\Theta_1^{(2)}(2m)}$

$\alpha_3^{(3)} e^{-j\Theta_1^{(3)}(2m)}$

$\alpha_3^{(4)} e^{-j\Theta_1^{(4)}(2m)}$

F

$\alpha_3^{(1)} e^{-j\Theta_1^{(1)}(2m+1)}$

$\alpha_3^{(2)} e^{-j\Theta_1^{(2)}(2m+1)}$

$\alpha_3^{(3)} e^{-j\Theta_1^{(3)}(2m+1)}$

$\alpha_3^{(4)} e^{-j\Theta_1^{(4)}(2m+1)}$

G

$\alpha_4^{(1)} e^{-j\Theta_1^{(1)}(2m)}$

$\alpha_4^{(2)} e^{-j\Theta_1^{(2)}(2m)}$

$\alpha_4^{(3)} e^{-j\Theta_1^{(3)}(2m)}$

$\alpha_4^{(4)} e^{-j\Theta_1^{(4)}(2m)}$

H

$\alpha_4^{(1)} e^{-j\Theta_1^{(1)}(2m+1)}$

$\alpha_4^{(2)} e^{-j\Theta_1^{(2)}(2m+1)}$

$\alpha_4^{(3)} e^{-j\Theta_1^{(3)}(2m+1)}$

$\alpha_4^{(4)} e^{-j\Theta_1^{(4)}(2m+1)}$

# FIG.12

$H_{m1}$  $H_{m1+M/2}$  $H_{m2}$  $H_{m2+M/2}$  $H_{m3}$  $H_{m3+M/2}$ ...

$H_{m1}+H_{m1+M/2}$  $H_{m1}-H_{m1+M/2}$  $H_{m2}+H_{m2+M/2}$  $H_{m2}-H_{m2+M/2}$  $H_{m3}+H_{m3+M/2}$  $H_{m3}-H_{m3+M/2}$ ...

DFT 2 points

facteurs "tweedle"

IFFT à M/2 points

$IFFT\left(H_m + H_{m+M/2}\right)$ entrelacée avec

$IFFT\left(H_m - H_{m+M/2}\right)$

**FIG.13**

Formation des faisceaux

C_p(2m)

$\alpha_p^{(1)} e^{-j\Phi p^{(1)}(2m)}$

entrelacé avec

$\alpha_p^{(2)} e^{-j\Phi p^{(2)}(2m)}$

$H^{(q)}(2m)$

C_p(2m+1)

$\alpha_p^{(2)} e^{-j\Phi p^{(2)}(2m+1)}$

entrelacé avec

$\alpha_p^{(2)} e^{-j\Phi p^{(2)}(2m+1)}$

$H^{(q)}(2m+1)$

$e^{-j\pi n/M}$

$e^{j\pi n/(M/2)}$

Voie de réception numéro p

Groupe numéro q de faisceaux multiplexés par 2

FIG.14

FIG.15

Voie de réception numéro p

Groupe numéro q de faisceaux multiplexés par $2^K$

$C_p(2m)$

$C_p(2m+1)$

$Z^{-M}$

$e^{-j\pi n/M}$

$FFT_M$

$\downarrow 2$

Répété x$2^K$

$\alpha_p^{(q)} e^{-j\Phi_p^{(q)}(2m)}$
entrelacé avec les
autres valeurs pour
q tel que $1 \leq q \leq 2^k$

$\alpha_p^{(q)} e^{-j\Phi_p^{(q)}(2m+1)}$
entrelacé avec les
autres valeurs pour
q tel que $1 \leq q \leq 2^k$

$H^{(q)}(2m)$

$H^{(q)}(2m+1)$

bloc figure 13

IFFT $2^{N-K}$

$e^{j\pi n/(M/2^K)}$

Formation des faisceaux

FIG.16

EP 4 239 904 B1

$$\underline{\text{FIG.17}}$$

FIG.18

Voie de
réception

2 voies
de calcul

Voies
des Q' voies
destinées à
former les Q'
sous-faisceaux

$\Sigma$ et − avec
décalage
fréquentiel

Q'
sous-faisceaux

Figure
13

Autres voies des Q' voies
destinées à former les Q'
sous-faisceaux
les voies étant issues
d'autres voies de réception

Q faisceaux

## FIG.19

Groupe de voies de réception          Formation des sous-faisceaux

## FIG.20

FIG.21

**FIG.22**

FIG.23

**FIG.24**

FIG.25

## FIG.26

FIG.27

**RÉFÉRENCES CITÉES DANS LA DESCRIPTION**

**Documents brevets cités dans la description**

- US 5671168 A
- FR 3049131
- FR 3102264
- FR 3102262
- FR 3102265
- FR 3049131 A1